# EUROPEAN PATENT APPLICATION

(11) **EP 4 458 562 A1**
(43) Date of publication of application: **06.11.2024**
(21) Application number: 22915888.6
(22) Date of filing: 21.12.2022
(51) Int. Cl.: B29C 65/40, B29B 11/08, B29C 65/70, B29C 69/00

(54) **JOINED BODY MANUFACTURING METHOD AND BASE MATERIAL MANUFACTURING METHOD**

(30) Priority: 27.12.2021 JP 2021213479
(71) Applicant: Resonac Corporation, Tokyo 105-7325 (JP)
(72) Inventor: TAKAHASHI, Nobuyuki, Tokyo 105-7325 (JP); MORI, Masatoshi, Tokyo 105-7325 (JP)
(74) Representative: Strehl Schübel-Hopf & Partner
(86) International application number: PCT/JP2022/047239
(87) International publication number: WO 2023/127665

(57) **Abstract**

Provided is a method or the like for producing a joined body having a short joining process time and excellent handleability during joining. The present invention relates to a method or the like for producing a joined body, including: an injection molding step of injecting a thermoplastic resin composition into a cavity of a mold in a state where a solid joining agent containing a thermoplastic resin having an epoxy equivalent of 1,600 or more or containing no epoxy group is placed on a wall surface in the cavity to obtain a first base material in which a resin molded body made of the thermoplastic resin composition and the solid joining agent are integrated; and a joining step of melting and then solidifying the solid joining agent in a state where the solid joining agent of the first base material is in contact with a second base material to obtain a joined body between the first base material and the second base material.

## Description

### Technical Field

The present invention relates to a method for producing a joined body, which enables the same or different base materials to be easily and firmly joined together, and to a method for producing a base material applicable to the method for producing a joined body.

### Background Art

In recent years, multi-materialization of parts in various fields, such as automobile parts, medical equipment, and home appliances, has been progressing from the viewpoint of weight reduction and high capability of products. The multi-materialization is a method of reducing the weight of a material and increasing the strength of the material by using materials (hereinafter, referred to as different kinds of materials) having different functions and materials in combination. In order to realize the multi-materialization, a technique for firmly joining the different kinds of materials is indispensable.

As a means for firmly joining the different kinds of materials, a thermosetting epoxy resin-based adhesive (PTL 1 and the like) which is a liquid type adhesive is widely used.

Joining using a liquid type adhesive requires an application step of applying a liquid resin composition and a curing step of polymerizing and curing the resin composition after the application.

Therefore, when the joining is performed using the liquid type adhesive, there is a problem that it takes a long time to apply the resin composition in the application step, and it takes a long time for the polymerization reaction in the curing step (that is, the joining process takes a long time), resulting in a lack of convenience.

As a means for joining the different kinds of materials, a thermoplastic adhesive composition (hereinafter, hot-melt adhesive) is also used (PTL 2 and the like). Since the hot-melt adhesive performs adhesion by utilizing a phase change that is not accompanied by a polymerization reaction, the joining process time is shorter than that of the liquid type adhesive, and the hot-melt adhesive is excellent in convenience.

However, when joining the different kinds of materials using a hot-melt adhesive, a step of applying the hot-melt adhesive in a heated and melted state to one base material and a step of bonding the other base material to the hot-melt adhesive present in a heated and melted state on the one base material are required, and therefore, further shortening of the joining process time is required.

### Citation List

### Patent Literature

| | |
|---|---|
| PTL 1: | JP 2019-157018 A |
| PTL 2: | JP 10-168417 A |

### Summary of Invention

### Technical Problem

The present invention has been made in view of such technical background, and it is an object of the present invention to provide a method for producing a joined body having a short joining process time and excellent handleability at the time of j oining, and a method for producing a base material which is applied to the method for producing the joined body.

### Solution to Problem

As a result of extensive studies, the present inventors have found that a joined body having excellent handleability can be produced in a short joining process time by injecting a thermoplastic resin composition into a cavity in which a specific solid joining agent is placed to obtain a first base material and melting the solid joining agent in a state in which a second base material is in contact with the solid joining agent of the first base material. The present invention is based on this finding.

That is, the present invention provides the following [1] to [10].
[1] A method for producing a joined body, including:
   an injection molding step of injecting a thermoplastic resin composition into a cavity of a mold in a state where a solid joining agent containing a thermoplastic resin having an epoxy equivalent of 1,600 or more or containing no epoxy group is placed on a wall surface in the cavity to obtain a first base material in which a resin molded body made of the thermoplastic resin composition and the solid joining agent are integrated; and
   a joining step of melting and then solidifying the solid joining agent in a state where the solid joining agent of the first base material is in contact with a second base material to obtain a joined body between the first base material and the second base material.
[2] The method for producing a joined body according to [1], in which the thermoplastic resin contained in the solid joining agent contains at least one selected from a thermoplastic epoxy resin and a phenoxy resin.
[3] The method for producing a joined body according to [1] or [2], in which the thermoplastic resin contained in the solid joining agent is an amorphous thermoplastic resin, and the amorphous thermoplastic resin has a heat of fusion of 15 J/g or less.
[4] The method for producing a joined body according to any one of [1] to [3], in which in the joining step, the solid joining agent is melted and then solidified by at least one selected from the group consisting of contact-heating, warm-air-heating, hot press, infrared-heating, hot-plate welding, ultrasonic welding, vibration welding, high-frequency induction welding, and high-frequency dielectric welding.
[5] The method for producing a joined body according to any one of [1] to [4], in which a softening point of the solid joining agent is lower than a melting point of the resin molded body.
[6] The method for producing a joined body according to any one of [1] to [5], in which the second base material is a metal.
[7] The method for producing a joined body according to any one of [1] to [6], in which the joining step is performed under conditions of pressures of the first base material and the second base material of 0.01 to 20 MPa.
[8] The method for producing a joined body according to any one of [1] to [7], in which in the first base material, the surface of the solid joining agent is flush with the surface of the resin molded body.
[9] The method for producing a joined body according to any one of [1] to [8], in which the solid joining agent placed on the wall surface in the cavity is a film.
[10] A method for producing a base material, the method including: injecting a thermoplastic resin composition into a cavity of a mold in a state where a solid joining agent is placed on a wall surface in the cavity, to thereby obtain a base material in which a resin molded body made of the thermoplastic resin composition and the solid joining agent are integrated, in which the solid joining agent is at least one selected from a thermoplastic epoxy resin and a phenoxy resin and contains an amorphous thermoplastic resin having an epoxy equivalent of 1,600 or more or containing no epoxy group.

### Advantageous Effects of Invention

According to the present invention, it is possible to provide a method for producing a joined body having excellent handleability in a short joining process time.

### Brief Description of Drawings

Fig. 1 is a cross-sectional view of a mold used in a method for producing a joined body according to an embodiment.
Fig. 2 is a cross-sectional view of a first base material according to a first embodiment produced using the mold of Fig. 1.
Fig. 3 is a plan view of the first base material of Fig. 2 as viewed from the side on which a solid joining agent is present.
Fig. 4 is a longitudinal sectional view of a joined body including the first base material of Fig. 2.
Fig. 5 is a longitudinal sectional view taken along the line X-X of the joined body shown in Fig. 4.
Fig. 6 is a longitudinal sectional view of a joined body according to another embodiment.
Fig. 7 is a plan view of a first base material according to another embodiment.
Fig. 8 is a plan view of a first base material according to another embodiment.
Fig. 9 is a plan view of a first base material according to another embodiment.
Fig. 10 is a plan view of a first base material according to another embodiment.
Fig. 11 is a plan view of a first base material according to another embodiment.
Fig. 12 is a longitudinal sectional view showing a state before joining of a joined body according to an embodiment.
Fig. 13 is a longitudinal sectional view showing a state before joining of a joined body according to another embodiment.
Fig. 14 is a longitudinal sectional view showing a state before joining of a joined body according to another embodiment.
Fig. 15 is a longitudinal sectional view showing a joined body according to another embodiment.
Fig. 16 is a plan view of the joined body of Fig. 15 as viewed from the upper side (from the second base material side of the two base materials).
Fig. 17 is a perspective view of a first base material constituting the joined body of Fig. 15.
Fig. 18 is a longitudinal sectional view showing a joined body according to another embodiment.
Fig. 19 is a plan view of the joined body of Fig. 18 as viewed from the lower side (from the second base material side of the two base materials).

### Description of Embodiments

Hereinafter, embodiments of the present invention will be described in detail.

In the description herein, joining means coupling materials together, and adhesion and welding are narrower concepts thereof. The term "adhesion" means that two adherends (to be adhered to each other) are placed in a joined state through an organic material (such as thermosetting resins or thermoplastic resins) such as a tape or an adhesive. The term "welding" means bringing the surfaces of thermoplastic resins and the like into a joined state by utilizing entanglement and crystallization due to molecular diffusion, which occur in the process of melting the surfaces by heat and cooling the surfaces.

In the description herein, the description of "A to B" indicating a numerical range indicates a numerical range including A and B which are endpoints. That is, it means "A or more and B or less" (when A < B), or "A or less and B or more" (when A > B).

### [Production Method of Joined Body]

The method for producing a joined body according to the present embodiment includes:
an injection molding step of injecting a thermoplastic resin composition into a cavity of a mold in a state where a solid joining agent containing a thermoplastic resin having an epoxy equivalent of 1,600 or more or containing no epoxy group is placed on a wall surface in the cavity to obtain a first base material in which a resin molded body made of the thermoplastic resin composition and the solid joining agent are integrated; and
a joining step of melting and then solidifying the solid joining agent in a state where the solid joining agent of the first base material is in contact with a second base material to obtain a joined body between the first base material and the second base material.

According to the production method, since the first base material with which the solid joining agent is integrated in advance is used to perform joining with the second base material, the joining process time can be shortened (shortening of the joining process time) as compared with a conventional production method that requires a step of applying a hot-melt adhesive to one base material and a step of bonding the other base material to the hot-melt adhesive.

In addition, according to the production method, since the solid joining agent is integrated into the first base material, the joining work is easier than in the case where the three points of the solid joining agent, the first base material and the second base material are separate bodies, and the solid joining agent, the first base material and the second base material can be accurately joining in a desired positional relationship (improvement in handleability).

Further, according to the production method, in the injection molding step, the molten material of the thermoplastic resin composition is solidified in a state of being in contact with the solid joining agent. Therefore, the resin molded body formed by the solidification of the thermoplastic resin composition and the solid joining agent are firmly integrated. In addition, since the solid joining agent firmly integrated with the resin molded body and the second base material are subjected to joining, both the first base material and the second base material can be subjected to joining strongly (improvement in joining strength).

In addition, according to the production method, since the process of producing the resin molded body and the process of integrating the solid joining agent with the resin molded body are performed at the same time, the production process can be simplified compared to a conventional production method in which these processes are performed separately. In addition, since the first base material in which the solid joining agent is integrated in advance is used, the production process can be simplified as compared with the case where the first base material with the joining agent is produced by applying the liquid adhesive to the first base material and drying it. Further, since the first base material integrated with the solid joining agent can be produced in a factory or the like, it is not necessary to fix the solid joining agent to the first base material at the time of the assembly work of the first base material and the second base material, and therefore, the assembly work can be simplified (simplification of the production process (particularly, the assembly work)).

Hereinafter, each step will be described.

### <Injection Molding Step>

The injection molding step is a step of injecting a thermoplastic resin composition into a cavity of a mold in a state where a solid joining agent is placed on a wall surface in the cavity, thereby obtaining a first base material in which a resin molded body made of the thermoplastic resin composition and the solid joining agent are integrated.

### (Solid Joining Agent)

The term "solid" of the solid joining agent means that it is solid at ordinary temperature, that is, it has no fluidity in a state where it is not pressurized at 23°C.

It is desirable that the solid joining agent can maintain its outer shape without being deformed for 30 days or longer in a state where it is not pressurized at 23°C, and further has characteristics that it does not deteriorate.

Materials of the solid joining agent are not particularly limited, and the solid joining agent contains, for example, resin components. The content of the resin components in the solid joining agent is preferably 50% by mass or more, more preferably 70% by mass or more, still more preferably 80% by mass or more, even more preferably 90% by mass or more, and yet still more preferably 99% by mass or more.

The resin components in the solid joining agent contain thermoplastic resins having epoxy equivalents of 1,600 or more or containing no epoxy groups, and it is more preferable to contain the thermoplastic resins as the main component.

Here, the term "main component" means a component having the highest content among the resin components in the solid joining agent. The content of the thermoplastic resins in the resin components in the solid joining agent is preferably 50% by mass or more, more preferably 70% by mass or more, still more preferably 80% by mass or more, even more preferably 90% by mass or more, and yet still more preferably 99% by mass or more.

The softening point of the solid joining agent is preferably 20 to 200°C, more preferably 40 to 160°C, and still more preferably 45 to 120°C, from the viewpoint of heat resistance and weldability.

### «Thermoplastic Resin»

When the resin components in the solid joining agent contain a thermoplastic resin having 1,600 or more epoxy equivalents or containing no epoxy group, an open time can be prolonged.

In the description herein, the open time means a limited time from when the joining agent is applied or placed on the first base material to when the second base material is completely placed on the first base material. Within the open time, the joining force of the joining agent does not decrease, and the joining between the two base materials can be performed with a sufficient joining force. The longer the open time, the higher the convenience.

Specific examples of the thermoplastic resin include one or more resins selected from polyolefins and their acid-modified products, polystyrene, polymethylmethacrylate, AS resins, ABS resins, thermoplastic aromatic polyesters such as polyethylene terephthalate and polybutylene terephthalate, polycarbonates, polyimides, polyamides, polyamideimides, polyetherimides, polyethersulfones, polyphenylene ethers and their modified products, polyphenylene sulfides, polyoxymethylene, polyarylates, polyether ketones, polyether ether ketones, polyether ketone ketones, and thermoplastic epoxies. Further, they may be reinforced with, for example, at least one kind of fibers selected from carbon fiber, boron fiber, silicon carbide fiber, and glass fiber.

Among these, from the viewpoint of obtaining a joined body having excellent joining property in a short joining process time and from the viewpoint of lengthening the open time, the thermoplastic resin preferably contains at least one selected from thermoplastic epoxy resins and phenoxy resins, and at least one selected from thermoplastic epoxy resins and phenoxy resins is preferable.

The content of at least one selected from thermoplastic epoxy resins and phenoxy resins in the total amount of the resins contained in the solid joining agent is preferably 60 to 100% by mass, more preferably 80 to 100% by mass, and still more preferably 90 to 100% by mass, for example, 100% by mass.

In the description herein, the joining process time means a time from a start point at which joining of both base materials is started to an end point at which the preparation of the joined body is completed. However, in a case where a step of laminating the joining agent on an existing base material (first base material or second base material) before starting the joining of both base materials is separately required, the start point of the step is set as the start point.

Here, the "existing base material" means a base material which has a shape as a base material before the time point of starting the joining with the joining agent. Therefore, in the production method according to the present embodiment, at the start point of injection molding, the thermoplastic resin composition for injection molding does not yet have a shape as a base material, and thus is not an "existing base material". Therefore, in the production method according to the present embodiment, the start point means a time point at which the joining of the joining agent on the existing second base material is started. On the other hand, when the application of the liquid adhesive to one of the base materials is started, it can be said to be "the case where a step of laminating the joining agent on the existing base material (first base material or second base material) before starting the joining of both base materials is separately required", and thus the time point at which the application is started is set as the start point. Similarly, the time point at which the solid joining agent is placed on one of the base materials also means the start point.

According to the method for producing a joined body according to the present embodiment, since the first base material with which the solid joining agent has already been integrated is used for joining with the second base material, the step of joining between the solid joining agent and the first base material can be omitted, and therefore shorten of the joining process time can be achieved.

The epoxy equivalent of the thermoplastic resin is 1,600 or more, preferably 2,000 or more, more preferably 5,000 or more, still more preferably 9,000 or more, and it is most preferable that the epoxy equivalent is above the detection limit and an epoxy group is not substantially detected. According to this, since the terminal epoxy group content is small or the terminal epoxy group is not substantially contained, storage stability is excellent, and longterm storage at ordinary temperature is also possible.

The epoxy equivalent (weight of the thermoplastic resin containing 1 mol of epoxy groups) referred to herein is a value of epoxy equivalent of the thermoplastic resin contained in the solid joining agent before joining, and is a value (unit "g/eq.") measured by a method specified in JIS K 7236:2001. Specifically, the value is a value obtained by adding a solution of brominated tetraethylammonium acetic acid using a potentiometric titrator, using a 0.1 mol/L perchloric acid-acetic acid solution, and calculating the weight of the solid content of the solvent-diluted product (resin varnish) excluding the solvent as the weight of the resin. In the case of a mixture of two or more kinds of resins, it is also possible to calculate from the content of each resin and the epoxy equivalent.

Specifically, the epoxy equivalent can be measured and calculated by a method described in Examples.

The thermoplastic resin (particularly, a thermoplastic epoxy resin and a phenoxy resin) is more preferably an amorphous thermoplastic resin, and the amorphous thermoplastic resin preferably has an epoxy equivalent of 1,600 or more or does not contain an epoxy group and has a heat of fusion of 15 J/g or less.

By using a solid joining agent containing an amorphous thermoplastic resin having an epoxy equivalent of 1,600 or more and a heat of fusion of 15 J/g or less as a main component, a rapid decrease in viscosity as seen in conventional hot-melt adhesives does not occur when heated, and a state of low viscosity (for example, 0.001 to 100 Pa·s) is not reached even in a high-temperature region exceeding 200°C. Therefore, the solid joining agent does not flow out even in a molten state, and a high joining force can be stably obtained.

The amorphous thermoplastic resin in the present embodiment means a resin having a heat of fusion of 15 J/g or less.

Here, in the measurement of the heat of fusion, even in a case where the peak of the heat of fusion is broad and cannot be differentiated from noise or cannot be detected, the heat of fusion is regarded as 15 J/g or less.

The heat of fusion is calculated from the area of the endothermic peak of DSC (Differential Scanning Calorimeter) and the weight of the thermoplastic resin component. When an inorganic filler or the like is contained in the solid joining agent, the heat of fusion is calculated from the weight of the resin component excluding the inorganic filler. To be specific, 2 to 10 mg of a sample is weighed, placed in an aluminum pan, and heated from 23°C to 200°C or higher at 10°C/min using a DSC (DSC8231, manufactured by Rigaku Corporation) to obtain a DSC curve, and then calculated from the area of the endothermic peak at the time of melting obtained from the DSC curve and the aforementioned weighed value.

Specifically, the heat of fusion can be measured and calculated by a method described in Examples.

The heat of fusion of the thermoplastic resin is preferably 80 J/g or less, more preferably 60 J/g or less, still more preferably 15 J/g or less, even more preferably 11 J/g or less, yet still more preferably 7 J/g or less, and yet even more preferably 4 J/g or less, and the melting peak is most preferably at or below the detection limit.

In a case where the thermoplastic resin as the main component of the film has a melting point, the melting point is preferably 50°C to 400°C, more preferably 60°C to 350°C, and still more preferably 70°C to 300°C. When the melting point is in the range of 50°C to 400°C, the film is efficiently deformed and melted by heating and effectively wets and spreads on the joined surface, so that high joining force can be obtained.

In the description herein, the melting point of the thermoplastic resin means a temperature at which the thermoplastic resin is melted and starts to have fluidity. The melting point can also be measured by, for example, a melting peak temperature measured by DSC.

Specifically, the melting point can be measured and calculated by a method described in Examples.

From the viewpoint of obtaining a joined body having excellent joining property in a short joining process time, the content of the thermoplastic resin in the resin components of the solid joining agent is preferably 50% by mass or more, more preferably 70% by mass or more, still more preferably 80% by mass or more, even more preferably 90% by mass or more, and yet still more preferably 99% by mass or more, for example, 100% by mass.

The conventional heat-curable adhesive has problems that it is difficult to disassemble the joined body, it is difficult to separate and recycle different kinds of materials constituting the joined body (i.e., poor in recycling property), and it is difficult to reattach the joined body when the joining portion is displaced in the production process of the joined body or when the contents or the adherend has a defect and needs to be replaced (i.e., poor in repairing property), thus lacking convenience. On the other hand, in the case where the solid joining agent contains a thermosetting resin, the solid joining agent can be softened and melted by heat, and the base materials can be easily peeled off from each other, so that the solid joining agent has excellent recycling property. In addition, since the solid joining agent is thermoplastic, it can be reversibly softened, melted, and cured repeatedly, and is also excellent in repairing property.

### «Thermoplastic Epoxy Resin»

The thermoplastic epoxy resin is preferably a polymer of (a) a bifunctional epoxy resin monomer or oligomer and (b) a bifunctional compound having two identical or different functional groups selected from the group consisting of a phenolic hydroxy group, a carboxy group, a mercapto group, an isocyanate group, and a cyanate ester group.

By using such a compound, the polymerization reaction for forming a linear polymer preferentially proceeds, and a thermoplastic epoxy resin having desired properties can be obtained.

The bifunctional epoxy resin monomer or oligomer (a) refers to an epoxy resin monomer or oligomer having two epoxy groups in the molecules.

Specific examples of (a) include, for example, bisphenol A type epoxy resins, bisphenol F type epoxy resins, difunctional phenol novolac type epoxy resins, bisphenol AD type epoxy resins, biphenyl type epoxy resins, difunctional naphthalene type epoxy resins, difunctional alicyclic epoxy resins, difunctional glycidyl ester type epoxy resins (e.g., diglycidyl phthalate, diglycidyl tetrahydrophthalate, dimer acid diglycidyl ester, etc.), difunctional glycidyl amine type epoxy resins (e.g., diglycidyl aniline, diglycidyl toluidine, etc.), difunctional heterocyclic epoxy resins, difunctional diaryl sulfone type epoxy resins, hydroquinone type epoxy resins (e.g., hydroquinone diglycidyl ether, 2,5-di-tert-butylhydroquinone diglycidyl ether, resorcin diglycidyl ether, etc.), difunctional alkylene glycidyl ether-based compounds (e.g., butanediol diglycidyl ether, butenediol diglycidyl ether, butynediol diglycidyl ether, etc.), difunctional glycidyl group-containing hydantoin compounds (e.g., 1,3-diglycidyl-5,5-dialkylhydantoin, 1-glycidyl-3-(glycidoxyalkyl)-5,5-dialkylhydantoin, etc.), difunctional glycidyl group-containing siloxanes (e.g., 1,3-bis(3-glycidoxypropyl)-1,1,3,3-tetramethyldisiloxane, α,β-bis(3-glycidoxypropyl)polydimethylsiloxane, etc.), and modified products thereof. Among these, a bisphenol A type epoxy resin, a bisphenol F type epoxy resin, and a biphenyl type epoxy resin are preferable from the viewpoint of reactivity and workability.

Examples of the bifunctional compound having a phenolic hydroxy group (b) include mononuclear aromatic dihydroxy compounds having one benzene ring such as catechol, resorcin, and hydroquinone; bisphenols such as bis(4-hydroxyphenyl)propane (bisphenol A), bis(4-hydroxyphenyl)methane (bisphenol F), and bis(4-hydroxyphenyl)ethane (bisphenol AD); compounds having a condensed ring such as dihydroxynaphthalene; bifunctional phenol compounds having an allyl group introduced therein, such as diallylresorcin, diallylbisphenol A, and triallyldihydroxybiphenyl; and dibutylbisphenol A.

Specific examples of the carboxyl group-containing compound (b) include adipic acid, succinic acid, malonic acid, cyclohexanedicarboxylic acid, phthalic acid, isophthalic acid, and terephthalic acid.

Examples of the bifunctional compound having a mercapto group (b) include ethylene glycol bisthioglycolate and ethylene glycol bisthiopropionate.

Specific examples of the bifunctional compound having an isocyanate group (b) include diphenylmethane diisocyanate (MDI), isophorone diisocyanate (IPDI), hexamethylene diisocyanate (HMDI), and tolylene diisocyanate (TDI).

Specific examples of the bifunctional compound having a cyanate ester group (b) include 2,2-bis(4-cyanatophenyl)propane, 1,1-bis(4-cyanatophenyl)ethane, and bis(4-cyanatophenyl)methane.

Among the above (b), a bifunctional compound having a phenolic hydroxy group is preferred from the viewpoint of obtaining a polymer having thermoplasticity, a bifunctional compound having two phenolic hydroxy groups and having a bisphenol structure or a biphenyl structure is preferred from the viewpoint of heat resistance and joining property, and bisphenol A, bisphenol F or bisphenol S is preferred from the viewpoint of heat resistance and cost.

When (a) is a bisphenol A type epoxy resin, a bisphenol F type epoxy resin, a bisphenol S type epoxy resin, or a biphenyl type epoxy resin and (b) is bisphenol A, bisphenol F, or bisphenol S, the polymer obtained by polymerization of (a) and (b) has a structure in which a paraphenylene structure and an ether bond are used as a main skeleton, a main chain formed by connecting them with an alkylene group, and a hydroxy group generated by polyaddition are arranged in a side chain.

The linear structure composed of the paraphenylene skeleton can increase the mechanical strength of the polymer after polymerization, and the arranged hydroxy group in the side chain can improve the adhesion to the base materials. As a result, high joining strength can be realized while maintaining the workability of the thermosetting resin. Further, in the case of a thermoplastic resin, the resin can be recycled and repaired by softening and melting the resin by heat, and the recycling property and the repairing property which are problems in a thermosetting resin can be improved.

### <<Phenoxy Resin>>

The phenoxy resin is a polyhydroxy polyether synthesized from bisphenols and epichlorohydrin, and has thermoplasticity. For the production of the phenoxy resin, a method by a direct reaction of a dihydric phenol and epichlorohydrin, and a method by an addition polymerization reaction of a diglycidyl ether of a dihydric phenol and a dihydric phenol are known, and the phenoxy resin used in the present invention may be obtained by any production method. In the case of the direct reaction between a dihydric phenol and epichlorohydrin, examples of the dihydric phenol include phenols such as bisphenol A, bisphenol F, bisphenol S, biphenol, biphenylene diol, and fluorene diphenyl; and aliphatic glycols such as ethylene glycol, propylene glycol, and diethylene glycol. Among them, bisphenol A, bisphenol F, and bisphenol S are preferable from the viewpoints of cost, joining property, viscosity, and heat resistance. One kind thereof may be used singly, or two or more kinds thereof may be used in combination.

The phenoxy resin has a chemical structure similar to that of an epoxy resin and has a structure in which a para-phenylene structure and an ether bond are used as a main skeleton, a main chain connecting them, and a hydroxy group is disposed in a side chain.

### «Physical Properties of Thermoplastic Resin»

The thermoplastic resin preferably has a weight average molecular weight (Mw) of 10,000 to 500,000, more preferably 18,000 to 300,000, still more preferably 20,000 to 200,000, and even more preferably 30,000 to 60,000. When the weight average molecular weight is in the range of this value, the balance between the thermoplasticity and the heat resistance is good, the joined body is efficiently obtained by melting, and the heat resistance thereof is increased. When the weight average molecular weight is 10,000 or more, the heat resistance is excellent, and when it is 500,000 or less, the viscosity at the time of melting is low, and the joining property is increased.

### <<Components other than Resin Components in Solid Joining Agent>>

If necessary, the solid joining agent may or may not contain fillers or additives as components other than the resin components within a range that does not hinder the object of the present invention.

Examples of the filler include an inorganic filler and an organic filler (resin powder).

Examples of the inorganic filler include spherical fused silica, metal powder of metal such as iron, silica sand, talc, calcium carbonate, mica, acid clay, diatomaceous earth, kaolin, quartz, titanium oxide, silica, phenol resin microballoons, and glass balloons.

In a case where the solid joining agent contains a filler, the content of the filler in 100% by volume of the total amount of the solid joining agent is preferably 50% by volume or less, more preferably 30% by volume or less, still more preferably 20% by volume or less, and most preferably 10% by volume or less. The volume of the filler can be obtained by dividing the weight of the filler contained in the solid joining agent by the true specific gravity of the filler.

The content of the resin component in 100% by volume of the total amount of the solid joining agent is preferably 10% by volume or more, more preferably 20% by volume or more, still more preferably 30% by volume or more, and even more preferably 50% by volume or more, and in one embodiment, 80% by volume or more, in another embodiment, 90% by volume or more, and in another embodiment, 99% by volume or more.

Examples of the additive include a viscosity modifier such as a reactive diluent, a defoaming agent, a coupling agent such as a silane coupling agent, and a pigment, and one or two or more of these may be contained.

The content of the additives in the solid joining agent is preferably 10% by mass or less, more preferably 5% by mass or less, and still more preferably 1% by mass or less.

The content of the resin component in the solid joining agent is preferably 10% by mass or more, more preferably 20% by mass or more, still more preferably 30% by mass or more, and even more preferably 50% by mass or more, and in one embodiment, 80% by mass or more, in another embodiment, 90% by mass or more, and in another embodiment, 99% by mass or more.

### <<Form of Solid Joining Agent>>

The form of the solid joining agent is not particularly limited, but it preferably has any form selected from the group consisting of films, rods, pellets, and powders.

The thickness of the solid joining agent is not particularly limited, but from the viewpoint of obtaining a joined body having excellent joining property in a short joining process time, the thickness is particularly preferably 1 mm or less, more preferably 0.5 mm or less, still more preferably 0.3 mm or less, even more preferably 0.2 mm or less, and most preferably 0.1 mm or less. On the other hand, from the viewpoint of obtaining high joining strength, the thickness is preferably 0.01 mm or more, more preferably 0.05 mm or more, and still more preferably 0.08 mm or more.

In a case where the solid joining agent is a film, the film may be a single layer or a laminate including a plurality of layers, but is preferably a single layer from the viewpoint of ease of production and improvement of joining force.

The solid joining agent may have tackiness as long as the joining force and the heat resistance thereof are not impaired. In the case of having tackiness, the solid joining agent can be temporarily fixed to a wall surface in a cavity of a mold by utilizing the tackiness when the first base material is produced. When tackiness is present, the first base material and the second base material can be temporarily fixed. When tackiness is absent, storage of the first base material is easy.

### <<Production Method of Solid Joined Body>>

The method for producing the solid joining agent is not particularly limited, but a film-shaped solid joining agent can be obtained by heating or heating and compressing the resin composition.

For example, a film-shaped solid joining agent containing at least one selected from the aforementioned thermoplastic epoxy resin and the aforementioned phenoxy resin can be produced by heating and polymerizing one or two or more of the raw material monomers and raw material oligomers of the aforementioned thermoplastic epoxy resin and the aforementioned phenoxy resin and, if necessary, a catalyst. At the time of the polymerization, a solvent may be added to reduce the viscosity and facilitate stirring. In the case of adding a solvent, it is necessary to remove the solvent, and a solid joining agent may be obtained by performing drying or polymerization or both on a release film or the like.

As the catalyst, for example, a tertiary amine such as triethylamine and 2,4,6-tris(dimethylaminomethyl)phenol; a phosphorus-based compound such as triphenylphosphine; and the like are suitably used. Among these, triphenylphosphine is preferable from the viewpoint of stability.

Examples of the solvent include cyclohexanone and methyl ethyl ketone, and cyclohexanone and methyl ethyl ketone are preferable.

Examples of a method of thermally compressing the resin composition include a compression method with a heated press (hot press) or the like.

A temperature of the hot press is preferably 120°C to 250°C, more preferably 130°C to 200°C, and still more preferably 140°C to 180°C.

In addition, a compression time in compressing the resin composition with a hot press is preferably 0.5 to 4 hours, more preferably 0.5 to 3 hours, and still more preferably 0.5 to 2 hours.

### (Thermoplastic Resin Composition to be Injected into Cavity)

The thermoplastic resin composition to be injected into the cavity contains a thermoplastic resin, and preferably contains a thermoplastic resin as a main component.

Here, the term "main component" means a component having the highest content among the resin components in the thermoplastic resin composition. The content of the thermoplastic resin in the resin component of the thermoplastic resin composition is preferably 50% by mass or more, more preferably 70% by mass or more, still more preferably 80% by mass or more, even more preferably 90% by mass or more, and yet still more preferably 99% by mass or more.

The thermoplastic resin composition to be injected into the cavity is preferably one in which polymerization during molding has been completed, and the thermoplastic resin is preferably one that does not require polymerization reaction in the mold from the viewpoint of shortening the molding cycle. That is, it is preferable that the polymerization reaction is not carried out by heating or the like in the mold, but the thermoplastic resin is solidified only by cooling in the mold.

In addition, from the viewpoint of moldability, the thermoplastic resin composition to be injected into the cavity preferably has a low viscosity at the time of melting, and the content of the phenoxy resin or the thermoplastic epoxy resin having a high viscosity is preferably 60% by mass or less, or the thermoplastic resin composition is preferably not the phenoxy resin or the thermoplastic epoxy resin.

Specific examples of the thermoplastic resin include one or more resins selected from polyolefins and their acid-modified products, polystyrene, polymethylmethacrylate, AS resins, ABS resins, thermoplastic aromatic polyesters such as polyethylene terephthalate and polybutylene terephthalate, polycarbonates, polyimides, polyamides, polyamideimides, polyetherimides, polyethersulfones, polyphenylene ethers and their modified products, polyphenylene sulfides, polyoxymethylene, polyarylates, polyether ketones, polyether ether ketones, polyether ketone ketones, and thermoplastic epoxies. In addition, it is preferable that they are reinforced with, for example, at least one kind of fibers selected from carbon fiber, boron fiber, silicon carbide fiber, and glass fiber because the strength is increased.

Among these, thermoplastic aromatic polyesters such as polyethylene terephthalate and polybutylene terephthalate, polycarbonate, polyimide, polyamide, polyamideimide, polyetherimide, polyethersulfone, polyphenylene ether and their modified products, polyphenylene sulfide, and polyoxymethylene are preferable from the viewpoint of heat resistance and moldability, and polyethylene terephthalate, polybutylene terephthalate, polycarbonate, polyimide, and polyamide are more preferable from the viewpoint of adhesiveness to solid joining agents.

The thermoplastic resin composition may contain other components in addition to the resin component.

Examples of the other components include the above-mentioned other components used in the solid joining agent. In addition, it is preferable that they are reinforced with, for example, at least one kind of fibers selected from carbon fiber, boron fiber, silicon carbide fiber, and glass fiber because the strength is increased.

The total content of the filler and the reinforcing fibers in 100% by volume of the total amount of the thermoplastic resin composition is preferably 50% by volume or less, more preferably 30% by volume or less, and most preferably 20% by volume or less. The volume of the filler can be obtained by dividing the weight of the filler contained in the thermoplastic resin composition by the true specific gravity of the filler. In the case of the amorphous thermoplastic resin composition, the total content of the filler and the reinforcing fibers in 100% by volume of the total amount of the thermoplastic resin composition is preferably 30% by volume or less, more preferably 10% by volume or less, and most preferably 5% by volume or less.

The content of the resin component in 100% by volume of the total amount of the thermoplastic resin composition is preferably 10% by volume or more, more preferably 20% by volume or more, still more preferably 30% by volume or more, and even more preferably 50% by volume or more, and in one embodiment, 80% by volume or more, in another embodiment, 90% by volume or more, and in another embodiment, 99% by volume or more.

The content of the additives in the thermoplastic resin composition is preferably 10% by mass or less, more preferably 5% by mass or less, and still more preferably 1% by mass or less.

The content of the resin component in the thermoplastic resin composition is preferably 10% by mass or more, more preferably 20% by mass or more, still more preferably 30% by mass or more, and even more preferably 50% by mass or more, and in one embodiment, 80% by mass or more, in another embodiment, 90% by mass or more, and in another embodiment, 99% by mass or more.

### (Mold)

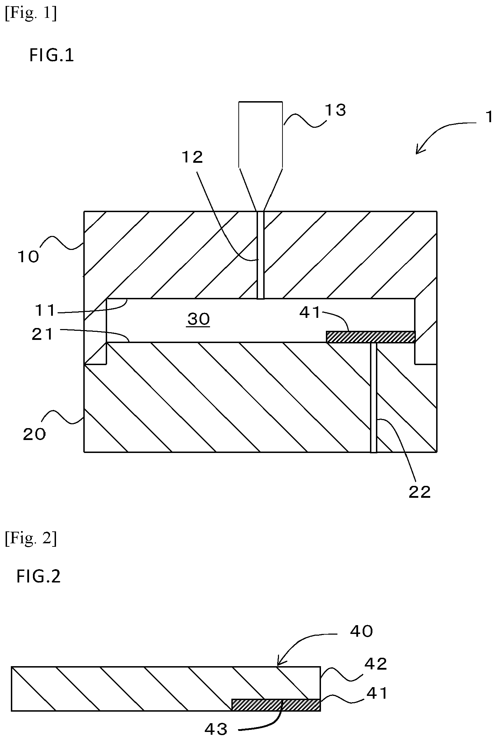

The mold is not particularly limited, and a conventional mold can be used, for example, a mold 1 shown in Fig. 1 can be used.

The mold 1 has a first mold 10 and a second mold 20. By closing the first mold 10 and the second mold 20, a cavity 30 is formed between the first mold 10 and the second mold 20. The cavity 30 is covered with a first cavity surface 11 on the side of the first mold 10 and a second cavity surface 21 on the side of the second mold 20.

The first mold 10 is provided with a gate 12 which penetrates the first mold 10 and reaches the cavity 30. An injection machine 13 is provided at the end of the gate 12 opposite to the cavity 30. The injection machine 13 includes a hopper (not shown) and a cylinder (not shown).

The second mold 20 is provided with a suction hole 22 which penetrates the second mold 20 and reaches the cavity 30. A negative pressure generating source (negative pressure pump or the like), which is not shown, is provided at the end of the suction hole 22 opposite to the cavity 30. A solid joining agent 41 is placed on the wall surface of the cavity 30 so as to cover the suction hole 22, and the inside of the suction hole 22 is depressurized by operating the negative pressure generating source, whereby the solid joining agent 41 is adsorbed to the wall surface of the cavity 30. In this manner, the solid joining agent 41 can be temporarily fixed to the wall surface of the cavity 30 easily and accurately.

Note that the suction hole 22 may be omitted. For example, when the solid joining agent has tackiness, the solid joining agent can be temporarily fixed to the wall surface of the cavity 30 by utilizing the tackiness.

### (Conditions for Injection Molding)

The conditions for injection molding are not particularly limited, and for example, injection molding may be performed under the following conditions.

The thermoplastic resin composition is melted and the molten thermoplastic resin composition is injection molded into the cavity.

The temperature of the thermoplastic resin composition at the time of injecting the thermoplastic resin composition into the cavity is preferably a decomposition temperature or lower and is in a temperature range having fluidity.

In this manner, in a state in which the solid joining agent is placed on the wall surface in the cavity of the mold, the thermoplastic resin composition is injected into the cavity, whereby the first base material in which the resin molded body made of the thermoplastic resin composition and the solid joining agent are integrated can be obtained.

In the obtained first base material, the surface of the solid joining agent that was in contact with the wall surface in the cavity becomes an exposed surface.

### (First Base Material)

The first base material is formed by integrating a resin molded body made of the thermoplastic resin composition and a solid joining agent.

The melting point of the first base material is not particularly limited, but is preferably 100°C to 400°C, more preferably 150°C to 350°C, and still more preferably 180°C to 300°C from the viewpoint of absorbing joining force and dimensional error.

The softening point of the first base material is not particularly limited, but is preferably 50°C to 300°C, more preferably 80°C to 250°C, and still more preferably 100°C to 230°C from the viewpoint of absorbing joining force and dimensional error.

From the viewpoint of adhesiveness between the resin of the first base material melted during injection molding and the solid joining agent, the softening point of the solid joining agent is preferably lower than the melting point of the resin molded body. From the same viewpoint, the melting point of the solid joining agent is preferably equal to or lower than the melting point of the resin molded body, and more preferably lower than the melting point of the resin molded body.

The value obtained by subtracting the softening point of the solid joining agent from the melting point of the resin molded body is preferably higher than 0°C and 300°C or lower, more preferably 20 to 280°C, still more preferably 40 to 250°C, even more preferably 60 to 220°C, and yet still more preferably 80 to 170°C.

Specifically, the softening point can be measured and calculated by a method described in Examples.

In the first base material, the surface of the solid joining agent is preferably flush with the surface of the resin molded body. As a result, it is possible to prevent the solid joining agent from protruding from the surface of the resin molded body and increasing the thickness of the first base material.

In the obtained first base material, at least a part of the surface of the solid joining agent is an unexposed surface covered by the resin molded body, and the remaining part of the surface of the solid joining agent is an exposed surface not covered by the resin molded body.

In the obtained first base material, when the solid joining agent has a film shape, among a first surface, a second surface facing the first surface, and a side surface connecting the first surface and the second surface of the solid joining agent having the film shape, a part or all of the first surface may be exposed, a part or all of the second surface may be exposed, and a part of the side surface may be exposed.

The film-shaped solid joining agent in the first base material preferably includes the following (a) and (b), or the following (a) and (c).
(a) One of the first surface and the second surface of the solid joining agent is a non-exposed surface covered with the resin molded body, and the other is an exposed surface not covered with the resin molded body.
(b) A part of the side surfaces of the solid joining agent is a non-exposed surface covered with the resin molded body, and the remaining part of the side surface is an exposed surface not covered with the resin molded body.
(c) All of the side surfaces of the solid joining agent are non-exposed surfaces covered with the resin molded body.

In addition, it is preferable that the above (a) includes the following (a1).

(a1) One of the first surface and the second surface of the solid joining agent is a non-exposed surface covered with the resin molded body, and the other is an exposed surface not covered with the resin molded body, and the exposed surface is flush with the surface of the resin molded body.

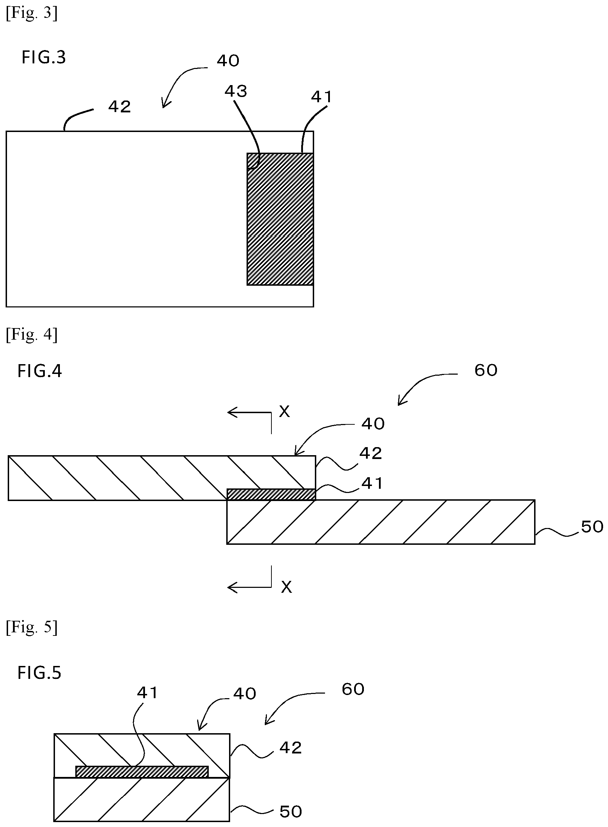

Next, a specific example of the first base material will be described with reference to Fig. 2 and Fig. 3.

Fig. 2 is a longitudinal sectional view of the first base material 40 according to the first embodiment, and Fig. 3 is a plan view of the first base material 40 as viewed from the side where the solid joining agent 41 is present.

As shown in Fig. 2 and Fig. 3, the first base material 40 is formed by integrating the resin molded body 42 and the solid joining agent 41.

The first base material 40 is plate-shaped.

The solid joining agent 41 is sheet-shaped.

One of the first surface and the second surface (the upper surface in Fig. 2) of the solid joining agent 41 is a non-exposed surface covered with the resin molded body 42, and the other (the lower surface in Fig. 2) is an exposed surface not covered with the resin molded body 42, and the exposed surface is flush with the surface of the resin molded body 42 and constitutes a part of the surface of the first base material (that is, one surface of the first base material, the lower surface in Fig. 2) (corresponding to (a1) described above).

Parts of the side surfaces of the solid joining agent 41 (that is, three of the four side surfaces of the solid joining agent 41) are non-exposed surfaces covered with the resin molded body 42, and the remaining part of the side surfaces (i.e., the remaining one side surface) is an exposed side surface not covered with the resin molded body (corresponding to (b) described above). The exposed side surface of the solid joining agent 41 is flush with the side surface of the first base material.

The first base material is formed by integrating a resin molded body made of the thermoplastic resin composition and a solid joining agent.

### <Joining Step>

The joining step is a step of obtaining a joined body of the first base material and the second base material by melting and then solidifying the solid joining agent in a state where the solid joining agent of the first base material is brought into surface contact with the second base material.

Examples of the method for melting and then solidifying the solid joining agent include at least one method selected from the group consisting of contact heating, warm air heating, hot press, infrared heating, hot plate welding, ultrasonic welding, vibration welding, high-frequency induction welding, and high-frequency dielectric welding. Among these, hot press, ultrasonic welding, and high-frequency induction welding are preferable.

The conditions for performing ultrasonic welding are not particularly limited.

For example, the transmission frequency is preferably 10 to 70 kHz, and more preferably 15 to 40 kHz.

The ultrasonic wave application time is preferably 0.1 to 3 seconds, and more preferably 0.2 to 2 seconds, from the viewpoint of adhesiveness and appearance.

When the first base material and the second base material are pressurized during ultrasonic wave application, the pressurization force is preferably 0.01 to 20 MPa, more preferably 0.1 to 10 MPa, and still more preferably 0.2 to 5 MPa. When the pressure is in such a range, the solid joining agent is efficiently deformed and effectively wets and spreads on the bonding surface, so that a high bonding force is obtained.

The conditions for performing high-frequency induction welding are not particularly limited.

For example, the transmission frequency is preferably 100 to 2,000 kHz, more preferably 500 to 1,500 kHz, and still more preferably 700 to 1,000 kHz.

The high-frequency application time is preferably 0.1 to 30 seconds, and more preferably 0.2 to 10 seconds, from the viewpoint of adhesiveness and appearance.

When the first base material and the second base material are pressurized during high-frequency application, the pressurization force is preferably 0.01 to 20 MPa, more preferably 0.1 to 10 MPa, and still more preferably 0.2 to 5 MPa. When the pressure is in such a range, the solid joining agent is efficiently deformed and effectively wets and spreads on the bonding surface, so that a high bonding force is obtained.

Since the solid joining agent is integrated into the first base material, when the first base material and the second base material are joined, there is no concern that the solid joining agent comes off from the first base material or the position of the solid joining agent in the first base material shifts. Therefore, the first base material can be accurately joined to the joining position of the second base material, and the joining operation is easy.

When the solid joining agent contains a thermoplastic resin, the obtained joined body is excellent in recycling property and repairing property because the first base material and the second base material can be removed by heating, and the joined body can be easily disassembled into the first base material and the second base material by heating.

### (Second Base Material)

The material of the second base material is preferably at least one material selected from metals, glasses, ceramics, and resins such as thermoplastic resins and fiber reinforced plastics (FRP).

When the second base material is a metal, at least one material selected from aluminum, copper, and iron is preferable.

Specific examples of the thermoplastic resin include one or more resins selected from polyolefins and their acid-modified products, polystyrene, polymethylmethacrylate, AS resins, ABS resins, thermoplastic aromatic polyesters such as polyethylene terephthalate and polybutylene terephthalate, polycarbonates, polyimides, polyamides, polyamideimides, polyetherimides, polyethersulfones, polyphenylene ethers and their modified products, polyphenylene sulfides, polyoxymethylene, polyarylates, polyether ketones, polyether ether ketones, polyether ketone ketones, and thermoplastic epoxies. Further, they may be reinforced with, for example, at least one kind of fibers selected from carbon fiber, boron fiber, silicon carbide fiber, and glass fiber.

In the case where the second base material is a thermosetting resin, among these resins, at least one resin selected from a thermoplastic epoxy resin and a phenoxy resin is preferable from the viewpoint of obtaining a joined body having excellent joining property in a short joining process time and from the viewpoint of lengthening the open time.

The first base material and the second base material may be made of the same material or may be made of different materials, and the method for producing a joined body according to the present invention is suitably applied when joining different materials.

### (Pretreatment)

It is preferable that surfaces of the first base material and the second base material be both subjected to a pretreatment for the purpose of removal of contaminations on the surfaces and/or anchor effect.

Examples of the pretreatment include a degreasing treatment, an UV ozone treatment, a blasting treatment, a polishing treatment, a plasma treatment, a corona discharge treatment, a laser treatment, an etching treatment, and a flame treatment.

A pretreatment for cleaning the surface of the base material or a pretreatment imparting irregularities on the surface is preferable as the pretreatment. Specifically, when the base material includes aluminum, glass, a ceramic, cupper, or iron, at least one kind selected from the group consisting of a degreasing treatment, an UV ozone treatment, a blasting treatment, a polishing treatment, a plasma treatment, and an etching treatment is preferable, and when the base material includes an FRP, a polypropylene, a polycarbonate, a polymethyl methacrylate, a polyetherimide, a polyamide, or a polybutylene terephthalate, at least one kind selected from the group consisting of a degreasing treatment, an UV ozone treatment, a blasting treatment, a polishing treatment, a plasma treatment, and a corona discharge treatment is preferable.

One kind of the pretreatment may be carried out alone, or two or more kinds thereof may be carried out. Known methods can be used as specific methods for these pretreatments.

Usually, hydroxy groups derived from a resin or a reinforcing material are considered to be present on the surface of an FRP, and hydroxy groups are considered to be intrinsically present on glass and ceramic surfaces; meanwhile, hydroxy groups are newly generated through the pretreatment, and the amount of hydroxy groups on the surface of the base material can be increased.

The degreasing treatment is a method for dissolving dirt such as fat and oil on the base material surface with, for example, an organic solvent such as acetone and toluene to remove dirt.

The UV ozone treatment is a method for cleaning and modifying a surface by the energy of ultraviolet rays with short wavelengths emitted from a low-pressure mercury lamp and the power of ozone (O3) generated thereby. In a case of glass, the UV ozone treatment is one surface cleaning method for removing organic impurities on a surface. In general, a cleaned surface modifying device using a low-pressure mercury lamp is referred to as an "UV ozone cleaner", an "UV cleaning device", an "ultraviolet surface modifying device", and the like.

Examples of the blasting treatment include a wet blasting treatment, a shot blasting treatment, and a sandblasting treatment. Among these, a wet blasting treatment provides a surface finer than that obtained by a dry blasting treatment and is thus preferable.

Examples of the polishing treatment include buffing using a polishing cloth, roll polishing using polishing paper (sandpaper), and electrolytic polishing.

The plasma treatment creates a plasma beam with a high-voltage power supply and a rod and causes the plasma beam to impinge on a material surface to excite molecules and functionalize the molecules, and includes an atmospheric pressure plasma treatment method capable of imparting hydroxy groups or polar groups onto a material surface, for example.

The corona discharge treatment includes a method applied for surface modification of a polymer film and is a method for generating hydroxy groups or polar groups on a surface, beginning at radicals generated by cutting, with electrons emitted from an electrode, polymer main chains or side chains on a polymer surface layer.

The laser treatment is a technique improving surface characteristics by rapidly heating only a surface of a base material with laser irradiation and cooling same, and is an effective method for surface coarsening. Known laser treatment techniques can be used.

Examples of the etching treatment include chemical etching treatments such as an alkali method, a phosphoric acid-sulfuric acid method, a fluoride method, a chromic acid-sulfuric acid method, and a salt iron method, and electrochemical etching treatments such as an electrolytic etching method.

The flame treatment is a method combusting a mixed gas of a combustion gas and air to generate plasma from oxygen in the air and trying to make a surface hydrophilic by imparting the oxygen plasma to an object to be treated. Known flame treatment techniques can be used.

### (Joined Body)

The joined body includes a first base material and a second base material. Both are integrated by a solid joining agent.

In the joined body including the first base material having the above (a1), since the exposed surface of the solid joining agent constituting the first base material and the surface of the resin molded body are flush with each other, when the joined body is joined to the second base material, the two can be joined to each other, the thickness of the joined body can be prevented from increasing by the thickness of the solid joining agent, and the solid joining agent can be prevented from protruding from the joined surface during joining.

In addition, the second base material may be in contact with not only the solid joining agent of the first base material but also a part or all of the surfaces of the resin molded body of the first base material. Since the second base material and a part or all of the surfaces of the resin molded body are in contact with each other in this manner, the solid joining agent is pressed and deformed in the thickness direction when the first base material and the second base material are integrated, and the solid joining agent is prevented from protruding in a direction orthogonal to the thickness direction.

Fig. 4 is a longitudinal sectional view of a joined body 60 including a first base material 40 according to the first embodiment. Fig. 5 is a longitudinal sectional view taken along the line IX-IX of the joined body 60 shown in Fig. 4.

An exposed surface of the first base material 40 on which a solid joining agent 41 is exposed is in contact with a second base material 50. The first base material 40 and the second base material 50 are firmly joined to each other by the solid joining agent 41.

As shown in Fig. 5, the second base material 50 is in contact with not only the solid joining agent 41 of the first base material 40 but also a part of the surface (the lower surface in Fig. 5) of a resin molded body 42 of the first base material 40. As a result, when the first base material 40 and the second base material 50 are integrated, the solid joining agent 41 is pressed and deformed in the thickness direction, and the solid joining agent 41 is prevented from protruding in a direction orthogonal to the thickness direction (the left-right direction in Fig. 4 and the left-right direction in Fig. 5).

As shown in Fig. 4 and Fig. 5, the entire exposed surface of the solid joining agent 41 is in contact with the second base material.

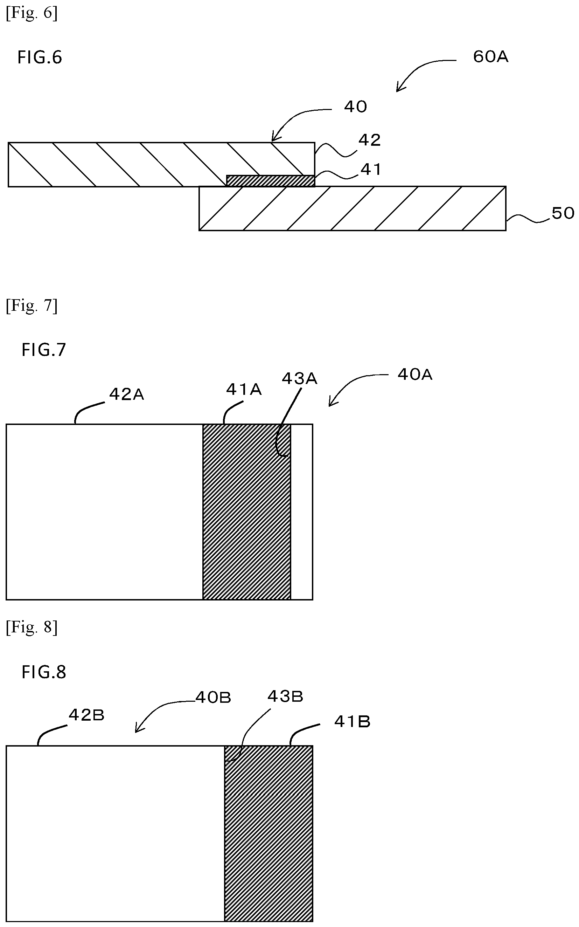

As shown in Fig. 4, the solid joining agent 41 is in contact with the end portion of one side of the second base material 50 (the left end portion in Fig. 4). However, as shown in Fig. 6, the solid joining agent 41 may not be in contact with the end portion of one side of the second base material 50 (the left end portion in Fig. 4), and the vicinity of the one side may be in contact with a part of the surface of the resin molded body 42 (the lower surface in Fig. 6).

Fig. 7 to Fig. 11 are plan views of first base materials 40A to 40E according to the second embodiment to the sixth embodiment, respectively, as viewed from the side where solid joining agents 41A to 41E are present.

The first base material 40A in Fig. 7 is formed by integrating a resin molded body 42A and the solid joining agent 41A.

The first base material 40A is plate-shaped.

The solid joining agent 41Ais sheet-shaped.

One of the first surface and the second surface of the solid joining agent 41A is a non-exposed surface covered with the resin molded body 42A, and the other is an exposed surface not covered with the resin molded body 42A, and the exposed surface is flush with the surface of the resin molded body 42A and constitutes a part of the surface of the first base material (that is, one surface of the first base material) (corresponding to (a1) described above).

Parts of the side surfaces of the solid joining agent 41A (that is, a pair of side surfaces facing each other among the four side surfaces of the solid joining agent 41A) (the left side surface and the right side surface in Fig. 7) are non-exposed side surfaces covered by the resin molded body 42A, and the remaining parts of the side surfaces (the upper side surface and the lower side surface in Fig. 7) are exposed side surfaces not covered by the resin molded body 42A (corresponding to (b) described above).

The first base material 40B in Fig. 8 is formed by integrating a resin molded body 42B and the solid joining agent 41B.

The first base material 40B is plate-shaped.

The solid joining agent 41B is sheet-shaped.

One of the first surface and the second surface of the solid joining agent 41B is a non-exposed surface covered with the resin molded body 42B, and the other is an exposed surface not covered with the resin molded body 42B, and the exposed surface is flush with the surface of the resin molded body 42B and constitutes a part of the surface of the first base material (that is, one surface of the first base material) (corresponding to (a1) described above).

A part of the side surfaces of the solid joining agent 41B (that is, one of the four side surfaces of the solid joining agent 41B) (the left side surface in Fig. 8) is a non-exposed side surface covered by the resin molded body 42B, and the remaining parts of the side surfaces (the right side surface, the upper side surface, and the lower side surface in Fig. 8) are exposed side surfaces not covered by the resin molded body 42B (corresponding to (b) described above).

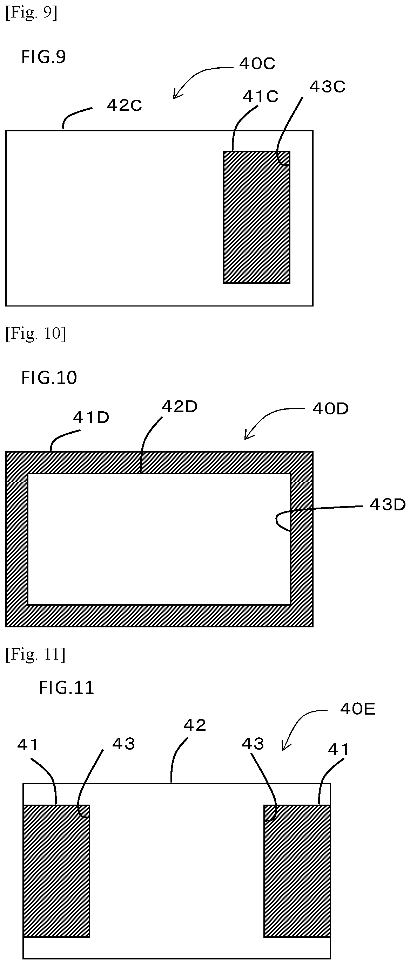

The first base material 40C in Fig. 9 is formed by integrating a resin molded body 42C and the solid joining agent 41C.

The first base material 40C is plate-shaped.

The solid joining agent 41C is sheet-shaped.

One of the first surface and the second surface of the solid joining agent 41C is a non-exposed surface covered with the resin molded body 42C, and the other is an exposed surface not covered with the resin molded body 42C, and the exposed surface is flush with the surface of the resin molded body 42C and constitutes a part of the surface of the first base material (that is, one surface of the first base material) (corresponding to (a1) described above).

All of the side surfaces of the solid joining agent 41C are non-exposed side surfaces covered by the resin molded body 42C (corresponding to (c) described above).

The first base material 40D in Fig. 10 is formed by integrating a resin molded body 42D and the solid joining agent 41D.

The first base material 40D is plate-shaped.

The solid joining agent 41D is sheet-shaped. More specifically, the solid joining agent 41D has a frame shape formed by connecting the front end and the rear end of the elongated sheet, and more specifically, has a square frame shape.

One of the first surface and the second surface of the solid joining agent 41D is a non-exposed surface covered with the resin molded body 42D, and the other is an exposed surface not covered with the resin molded body 42D, and the exposed surface is flush with the surface of the resin molded body 42D and constitutes a part of the surface of the first base material (that is, one surface of the first base material) (corresponding to (a1) described above).

Parts of the side surfaces of the solid joining agent 41D (that is, the inner peripheral surfaces of the inner peripheral surfaces and the outer peripheral surfaces of the solid joining agent 41D) are non-exposed side surfaces covered by the resin molded body 42D, and the remaining parts of the side surfaces (outer peripheral surfaces) are exposed side surface not covered by the resin molded body 42D (corresponding to (b) described above).

The first base material 40E of Fig. 11 is provided with two solid joining agents 41 similar to those of Fig. 3.

Although not shown, even in the case of the joined body using the first base materials 40A to 40E described above, the surfaces of the first base materials 40A to 40E where the solid joining agents 41Ato 41E are exposed are in contact with a second base material 50. The first base materials 40Ato 40E and the second base material 50 are firmly joined by the solid joining agents 41A to 41E.

In the above-described joined body, the surface of the first base material and the surface of the second base material are flat surfaces, but the joined body is not limited to flat surfaces, and the joined body may have a shape in which at least a part of the surface of the first base material and at least a part of the surface of the second base material can be brought into contact with each other, and may be a curved surface or a surface having at least one of a concave portion and a convex portion. Such a joined body also preferably includes the above-described (a) and (b), or (a) and (c).

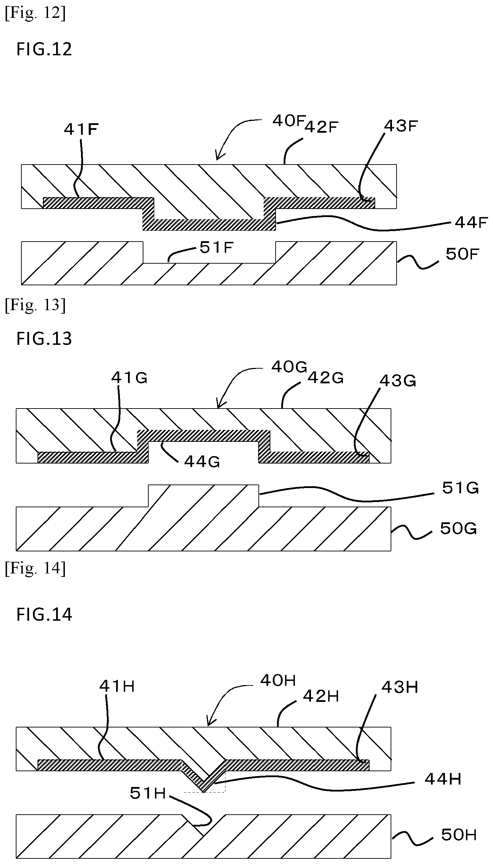

For example, there may be an embodiment in which a concave or convex fitting portion exists on one of the first surface and the second surface of the first base material, a convex or concave fitting portion to be fitted with the fitting portion of the first base material exists on one of the first surface and the second surface of the second base material, a solid joining agent is provided on at least a part of the surface of the fitting portion of the first base material, the exposed surface of the solid joining agent is flush with the surface of the resin molded body of the first base material, and a part or all of the exposed surface of the solid joining agent is in contact with the surface of the second base material. The following Figs. 12 to 14 illustrate this embodiment.

Fig. 12 is a longitudinal sectional view showing a state before joining of a joined body according to an embodiment.

A surface of a first base material 40F which is in contact with a second base material 50F is a flat surface, and a part of the flat surface is a projected convex portion 44F. A solid joining agent 41F is provided on the convex portion 44F and the flat surface of the peripheral edge thereof. A portion of the exposed surface of the solid joining agent 41F that is continuous with the surface of a resin molded body 42F of the first base material 40F is flush with the surface of the resin molded body 42F.

The surface of the second base material 50F that is in contact with the first base material 40F is a flat surface, and a part of the flat surface is a recessed concave portion 51F.

In a state in which the convex portion 44F and the concave portion 51F are fitted to each other, the first base material 40F and the second base material 50F are joined and integrated. As a result, the first base material 40F and the second base material 50F are firmly joined and integrated by the solid joining agent 41F.

Fig. 13 is a longitudinal sectional view showing a state before joining of a joined body according to another embodiment.

The surface of a first base material 40G that is in contact with a second base material 50G is a flat surface, and a part of the flat surface is a recessed concave portion 44G. A solid joining agent 41G is provided on the concave portion 44G and the flat surface of the peripheral edge thereof. A portion of the exposed surface of the solid joining agent 41G that is continuous with the surface of a resin-molded body 42G of the first base material 40G is flush with the surface of the resin-molded body 42G. The concave portion 44G has a flat bottom surface.

A surface of the second base material 50G which is in contact with the first base material 40G is a flat surface, and a part of the flat surface is a projected convex portion 51G. The convex portion 51G has a shape following the shape of the concave portion 44G.

In a state in which the concave portion 44G and the convex portion 51G are fitted to each other, the first base material 40G and the second base material 50G are joined and integrated. As a result, the first base material 40G and the second base material 50G are firmly joined and integrated by the solid joining agent 41G.

Fig. 14 is a longitudinal sectional view showing a state before joining of a joined body according to another embodiment.

A surface of a first base material 40H which is in contact with a second base material 50H is a flat surface, and a part of the flat surface is a projected convex portion 44H. The longitudinal sectional shape of the convex portion 44H has a sharp shape that becomes narrower from the base end toward the tip end. A solid joining agent 41H is provided on the convex portion 44H and the flat surface of the peripheral edge thereof. A portion of the exposed surface of the solid joining agent 41H that is continuous with the surface of a resin-molded body 42H of the first base material 40H is flush with the surface of the resin-molded body 42H.

The surface of the second base material 50H that is in contact with the first base material 40H is a flat surface, and a part of the flat surface is a recessed concave portion 51H. The concave portion 51H has a shape following the shape of the convex portion 44H.

In a state in which the convex portion 44H and the concave portion 51H are fitted to each other, the first base material 40H and the second base material 50H are joined and integrated. As a result, the first base material 40H and the second base material 50H are firmly joined and integrated by the solid joining agent 41H.

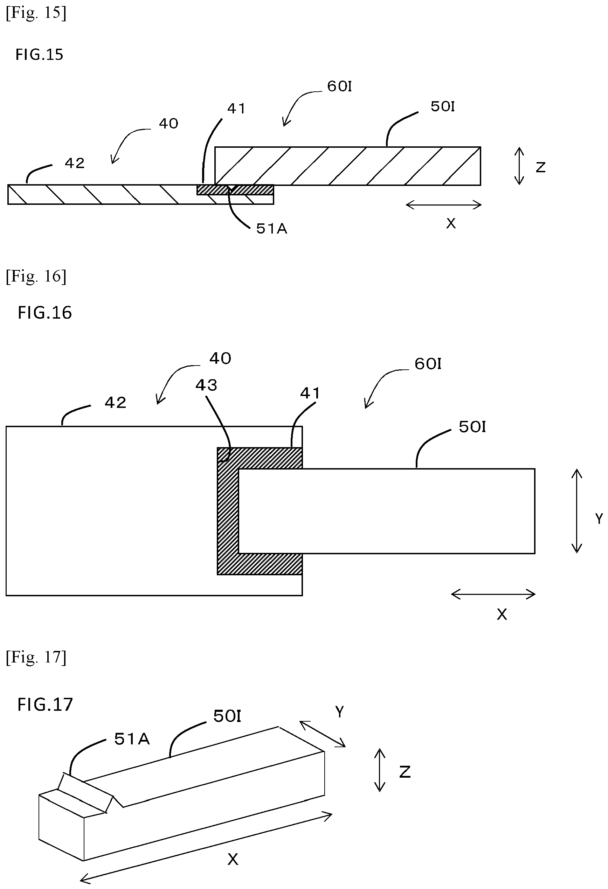

Fig. 15 is a longitudinal sectional view showing a joined body 60I according to another embodiment. Fig. 16 is a plan view of the joined body 60I as viewed from the upper side (the second base material 50I side of the first base material 40 and the second base material 50I). Fig. 17 is a perspective view of the second base material 50A constituting the joined body 60I. In Figs. 15 to 17, an arrow X indicates a vertical direction, an arrow Y indicates a horizontal direction, and an arrow Z indicates a thickness direction.

The joined body 60I includes the first base material 40 and the second base material 50I. The first base material 40 is as described above. The second base material 50I is substantially plate-shaped, and as shown in Fig. 17, has a protrusion 51A on one of the surfaces. The protrusion 51A extends in the widthwise direction of the second base material 50I. In this embodiment, the protrusion 51A extends from one end side to the other end side in the widthwise direction of the second base material 50I, but may extend in a part of the widthwise direction. In the projection 51A, as shown in Fig. 15, a longitudinal section of the second base material 50I has a triangular shape.

The projection 51Ais disposed in the solid joining agent 41.

The width (length in the lateral direction) of the second base material 50I is smaller than the width (length in the lateral direction) of the first base material 40I. The width (length in the lateral direction) of the solid joining agent 41 is larger than the width (length in the lateral direction) of the second base material 50I. However, the width (length in the lateral direction) of the solid joining agent 41J may be the same as or smaller than the width (length in the lateral direction) of the second base material 50I.

The surface of the second base material 50I is superposed and integrated so as to be in contact with the solid joining agent 41 of the first base material 40 and not in contact with the surface of the resin molded body 42 of the first base material 40. The solid joining agent 41 is sandwiched between the resin molded body 42 and the second base material 50I.

An example of a method for producing the joined body 60I having such a shape is as follows.

The first base material 40 and the second base material 50I are superposed. At this time, the protrusion 51A is brought into contact with the solid joining agent 41 to form a superposed body.

In this state, ultrasonic waves are applied to the second base material 50I, and the resin molded body 42 and the second base material 50I are pressed so as to compress the solid joining agent 41 in the thickness direction. At this time, since the protrusion 51A is provided, the ultrasonic waves efficiently act on the solid joining agent 41, and the ultrasonic welding can be favorably performed. However, the protrusion 51A may be omitted.

Since the solid joining agent 41 is pressed by the resin molded body 42 and the second base material 50I without the resin molded body 42 and the second base material 50I being in contact with each other, the solid joining agent 41 is pressed against the resin molded body 42 and the second base material 50I so as to be sufficiently in close contact therewith, thereby increasing the joining strength.

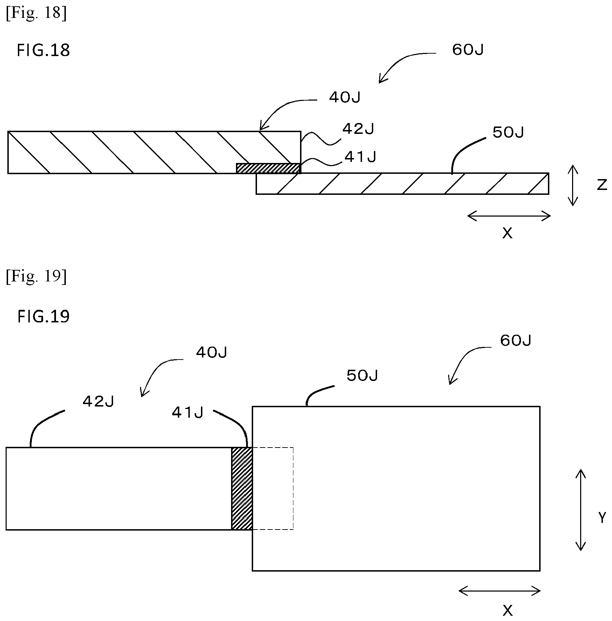

Fig. 18 is a longitudinal sectional view showing a joined body 60J according to another embodiment. Fig. 19 is a plan view of the joined body 60J as viewed from the lower side (the second base material 50I side of the first base material 40J and the second base material 50J). In Figs. 18 to 19, an arrow X indicates a vertical direction, an arrow Y indicates a horizontal direction, and an arrow Z indicates a thickness direction.

The joined body 60J includes the first base material 40J and the second base material 50J.

The first base material 40J is obtained by reducing the width (length in the lateral direction) of the first base material 40B in Fig. 8.

The second base material 50J is plate-shaped. The width (length in the lateral direction) of the second base material 50J is larger than the width (length in the lateral direction) of the first base material 40J. The width (length in the lateral direction) of the solid joining agent 41J is larger than the width (length in the lateral direction) of the second base material 50I. However, the width (length in the lateral direction) of the solid joining agent 41J may be the same as or smaller than the width (length in the lateral direction) of the second base material 501.

The surface of the second base material 50J is superposed and integrated so as to be in contact with the solid joining agent 41J of the first base material 40J and not in contact with the surface of the resin molded body 42J of the first base material 40J. The solid joining agent 41J is sandwiched between the resin molded body 42J and the second base material 50J.

An example of a method for producing the joined body 60J having such a shape is as follows.

The first base material 40J and the second base material 50J are superposed.

In this state, ultrasonic waves are applied to the second base material 50J, and the resin molded body 42J and the second base material 50J are pressed so as to compress the solid joining agent 41J in the thickness direction.

Since the solid joining agent 41J is pressed by the resin molded body 42J and the second base material 50J without the resin molded body 42J and the second base material 50J being in contact with each other, the solid joining agent 41J is pressed against the resin molded body 42J and the second base material 50J so as to be sufficiently in close contact therewith, thereby increasing the joining strength.

In each of the aforementioned joined bodies, a part of the surface of the solid joined body facing the second base material may be joined in contact with the second base material, or the entire surface of the solid joined body facing the second base material may be joined in contact with the second base material. The second base material may or may not be in contact with the resin molded body constituting the first base material.

In Fig. 1, reference numeral 43 denotes a concave portion for receiving the solid joining agent 41 in the resin molded body 42 constituting the first base material 40. Similarly, reference numerals 43A to 43H denote concave portions for receiving the solid joining agent in the resin molded body constituting the first base material.

### Examples

Hereinafter, the present invention will be described in more detail based on Examples, but the present invention is not limited to the following Examples.

Note that the longitudinal direction indicates the arrow X direction in Figs. 15 to 19, the lateral direction indicates the arrow Y direction in Figs. 15 to 19, and the thickness direction indicates the arrow Z direction in Figs. 15 to 19.

The materials used and the evaluation method were as follows.

### <First Base Material and Second Base Material>

The following base materials were used as the first base material and the second base material.

In the Examples and Comparative Examples to be described later, in the case of producing the first base material obtained by integrating a resin molded body made of a thermoplastic resin composition and a solid joining agent by injection molding, pellets made of the following resin were melted and subjected to injection molding as the thermoplastic resin composition.

### «PA6 (6-Nylon)»

Amilan CM3001G-30 (melting point: 225°C) manufactured by Toray Industries, Inc. was injection molded (resin temperature: 260°C, mold temperature: 80°C) to obtain a test piece (softening point: 215°C) having a length of 45 mm × a width of 10 mm × a thickness of 3 mm. The test piece was used without surface treatment.

In the base material used for the ultrasonic welding, a linear protrusion having a cross section of an equilateral triangle and a height of 0.5 mm was formed at a position 2.5 mm from the end in order to heat efficiently (see Fig. 17). The protrusion is formed by using a mold in which a concave portion having a shape following the protrusion is formed on a wall surface of a cavity.

On the other hand, the protrusion was not provided on the base material used for high-frequency induction welding.

### «PBT (Polybutylene Terephthalate)»

VAROX (TM) 420-1001 (melting point: 225°C) manufactured by SABIC was injection molded (resin temperature: 260°C, mold temperature: 50°C) to obtain a test piece (softening point: 207°C) having a length of 45 mm × a width of 18 mm × a thickness of 1.5 mm. The test piece was used without surface treatment.

### «PC (Polycarbonate)»

LEXAN (TM) 121R (melting point: 220°C) manufactured by SABIC was injection molded (resin temperature: 290°C, mold temperature: 90°C) to obtain a test piece (softening point: 129°C) having a length of 45 mm × a width of 10 mm × a thickness of 3 mm. The test piece was used without surface treatment.

### <<Iron>>

The surface of SPCC-SD was subjected to blasting treatment to obtain a test piece having a length of 45 mm × a width of 18 mm × a thickness of 1.5 mm.

### «Aluminum»

The surface of A6061-T6 was subjected to blasting treatment to obtain a test piece having a length of 45 mm × a width of 18 mm × a thickness of 1.5 mm.

### <Evaluation Method>

### (Weight Average Molecular Weight)

Thermoplastic epoxy resins and phenoxyresins were dissolved in tetrahydrofuran and measured under the following conditions using Prominence 501 (manufactured by SHOWA SCIENCE CO., LTD., Detector: Shodex (registered trademark) R1-501 (manufactured by Showa Denko K.K.)).
Column: two columns LF-804 manufactured by Showa Denko K.K.
Column temperature: 40°C
Sample: 0.4% by mass tetrahydrofuran solution of resin
Flow rate: 1 mL/minute
Eluting solution: tetrahydrofuran
Calibration method: standard polystyrene equivalent

### (Heat of Fusion and Melting Point)

A film and a joining agent were weighed in an amount of 2 to 10 mg, placed in an aluminum pan, and heated from 23°C to 200°C at a rate of 10°C/min by DSC (DSC8231, manufactured by Rigaku Corporation) to obtain a DSC curve. The heat of fusion was calculated from the area of the endothermic peak at the time of melting in the DSC curve and the weighed value. The melting peak temperature in the obtained DSC curve was taken as the melting point. When the melting peak is not obtained or is 15 J/g or less, the melting point of the thermoplastic resin (amorphous resin) which melts by heating is defined as a temperature obtained by adding 70°C to the glass transition point. In this region, the thermoplastic resin is melted and has fluidity. The glass transition point was measured from the DSC curve of the second cycle in which the temperature was raised to 200°C by DSC, then cooled to 40°C or lower, and further heated to 200°C. The melting point was not set for the thermosetting resin that did not melt by heating.

### (Softening Point)

In a case where the first base material and the second base material were made of resin, the softening point was measured in accordance with ISO-75-2/A. Since it is not practical to apply the method for measuring the softening point of ISO-75-2/A to a solid joining agent having a small thickness, the softening point of the solid joining agent was set as the glass transition point in the DSC curve.

### (Epoxy Equivalent)

The epoxy equivalent was measured in accordance with JIS K 7236:2001 and converted into a value as a resin solid content. In the case of a simple mixture that does not involve a reaction, the epoxy equivalent was calculated from each epoxy equivalent and content.

### (Thickness of Solid Joining Agent)

The thickness of the solid joining agent was measured using MDC-25MX manufactured by Mitutoyo Corporation after being left in an atmosphere with humidity of 50% at 23°C for 24 hours.

### (Shear Joining Force)

The joined bodies obtained in Examples and Comparative Examples were allowed to stand at a measurement temperature (23°C or 80°C) for 30 minutes or more, and then a tensile shear joining strength test was performed in 23°C and 80°C atmospheres using a tensile testing machine (universal testing machine Autograph "AG-X plus" (manufactured by Shimadzu Corporation); load cell 10 kN, tensile speed 10 mm/min) in accordance with ISO19095 to measure the joining strength.

### (Joining Process Time)

The joining process time was measured as follows.

The time from a start point to an end point was measured with the time point when the joining of both base materials was started as the start point and the time point when the production of the joined body was completed as the end point.

Specifically, in all of Examples and Comparative Examples 1 to 3, a time point at which the first base material and the second base material were superposed was set as a start point, and a time point at which the production of the joined body was completed was set as an end point.

In Comparative Example 4, a time point at which the application of the thermosetting liquid epoxy adhesive E-250 as the joining agent to the first base material and the second base material was started was set as a start point, and a time point at which the production of the joined body was completed was set as an end point.

In Comparative Examples 5 and 6, a first base material, a second base material, and a liquid resin composition as a joining agent were prepared, a time point at which the bar coating application of the joining agent to the second base material was started was set as a start point, and a time point at which the production of the joined body was completed was set as an end point.

In Comparative Example 7, a first base material, a second base material, and a film as a joining agent were prepared, and a time point at which the first base material, the film, and the second base material were superposed in this order was set as a start point, and a time point at which the production of the joined body was completed was set as an end point.

### (Handleability)

The handleability was measured as follows. When the first base material and the solid joining agent were fixed at the start of the joining step, the result was evaluated as good (A), and when the first base material and the solid joining agent were not fixed, the result was evaluated as poor (B).

### (Recycling Property)

The recycling property was determined based on whether or not the joined body could be easily peeled off with a force of 1 N or less after being placed on a hot plate at 200°C and heated for 1 minute. If the joined body could be peeled off, it was evaluated as good (A), and if not, it was evaluated as poor (B).

### (Repairing Property)

For each of the joined bodies produced by the Examples and the Comparative Examples, a joined body was produced again by the same operation as that of each Example and each Comparative Example using the first base material and the second base material of which the joint was released by the tensile shear joining strength test at 23°C, thereby obtaining a repair-joined body.

The shear joining force of the repair-joined body at 23°C was measured in the same manner as the above-mentioned test method, and it was evaluated as good (A) if the shear joining force was 80% or more of the first shear joining force, and it was evaluated as poor (B) if the shear joining force was less than 80%.

### (Open Time Evaluation)

Using the joined body for open time evaluation, the tensile shear joining strength test was performed at 23°C. When the shear joining force was 80% or more as compared with the test pieces prepared by the methods of the above-described Examples and Comparative Examples, it was evaluated as good (A), and when it was less than 80%, it was evaluated as poor (B). When the open time evaluation is good (A), it means that the open time is long and the convenience is excellent.

### <Examples 1-1, 1-2, and 1-3>

### (Production of Solid Joining Agent A1)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, weight average molecular weight: about 10,000), 1.0 equivalent (12.5 g) of bisphenol S, 2.4 g of triphenylphosphine, and 1,000 g of methyl ethyl ketone, and the temperature was increased to 100°C while stirring in a nitrogen atmosphere. Completion of dissolution was visually confirmed, and a resin composition P-1 with a solid content of about 20% by mass was obtained after cooling to 40°C. The solvent was removed from this to obtain a thermoplastic epoxy resin as a solid component. Non-adhesive fluororesin films (NITOFLON (registered trademark) No. 900UL, manufactured by Nitto Denko Corporation) were placed on an upper plate and a lower plate of a pressing machine, the thermoplastic epoxy resin was placed on the non-adhesive fluororesin film of the lower plate, the press machine was heated to 160°C, and the thermoplastic epoxy resin was heated and compressed for 2 hours to prepare a solid joining agent A1 having a solid content of 100% by mass.

The dimensions of the solid joining agent A1 were the following two types.
- Length 10 mm × Width 15 mm × Thickness 100 µm
- Length 7 mm × Width 10 mm × Thickness 100 µm

The weight average molecular weight was about 37,000. The epoxy equivalent was above the detection limit. No heat of fusion peak was detected in DSC.

The measurement results of the respective physical properties of the obtained solid joining agent A1 are as shown in Table 1. Note that the same measurement was performed on resin compositions obtained in other Production Examples described later, and the results are also shown in Table 1 or Table 2.

### (Production of First Base Material)

### «PBT (Solid Joining Agent: A1)»

The solid joining agent A1 (length 10 mm × width 15 mm × thickness 100 µm) was placed on the second cavity surface 21 in the cavity 30 of the preheated mold 1 (material: HPM38, cavity dimensions: length 45 mm × width 18 mm × height 1.5 mm) shown in Fig. 1, and the mold was closed. The above-described PBT was inj ection-molded in the mold 1 under the injection molding conditions shown in Table 1 to prepare the first base material 40 (length 45 mm × width 18 mm × thickness 1.5 mm) shown in Figs. 15 to 17.

Further, the solid j oining agent A1 (length 7 mm × width 10 mm × thickness 100 µm) was placed on the second cavity surface 21 in the cavity 30 of the preheated mold 1 (material: HPM38, cavity dimensions: length 45 mm × width 10 mm × height 3 mm) shown in Fig. 1, and the mold was closed. The above-described PBT was injection-molded in the mold 1 under the injection molding conditions shown in Table 1 to prepare the first base material 40 (length 45 mm × width 10 mm × thickness 3 mm) shown in Figs. 18 and 19.

### «PC (Solid Joining Agent: A1)»

The solid joining agent A1 (length 7 mm × width 10 mm × thickness 100 µm) was placed on the second cavity surface 21 in the cavity 30 of the preheated mold 1 (material: HPM38, cavity dimensions: length 45 mm × width 10 mm × height 3 mm) shown in Fig. 1, and the mold was closed.

The above-described PC was injection-molded in the mold 1 under the injection conditions shown in Table 1 to prepare the first base material 40J (length 45 mm × width 10 mm × thickness 3 mm) shown in Figs. 18 and 19.

### (Production of Joined Body A1-1 (PBT/PA))

The above-mentioned PBT (length 45 mm × width 18 mm × thickness 1.5 mm) was used as the first base material 40.

The above-mentioned PA6 (length 45 mm × width 10 mm × thickness 3 mm, with protrusion) was used as the second base material 50I.

The first base material 40 and the second base material 50I were superposed on each other such that the superposed region had a size of 5 mm in length × 10 mm in width such that the solid joining agent A1 was brought into contact with the surfaces of the second base material 50I so as to have the same positional relationship as in Figs. 15 to 17.

In addition, at the time of superposition, the linear protrusion provided on the surface of the second base material 50I was superposed so as to be in contact with the solid joining agent A1.

Next, ultrasonic waves were applied using an ultrasonic welding machine (manufactured by Seidensha Electronics Co., Ltd., Oscillator JII930S, Press JIIP30S), and the first base material 40 and the second base material 50I were joined by applying heat and pressure. The pressure at the time of pressurization was 110 N (pressure: 2.2 MPa), and the oscillation frequency was 28.5 kHz. The ultrasonic wave application time was 1 second. The subsequent retention time was 1 second. Thus, a joined body A1-1 was produced.

In addition, a joined body for open time evaluation was also produced in the same manner as described above except that the first base material 40 and the second base material 50I were allowed to stand for 3 days and then superposed and bonded together. Also in other Examples and Comparative Examples to be described later, a joined body for open time evaluation was produced in the same manner.

### (Production of Joined Body A1-2 (PC/SPCC))

The above-mentioned PC (length 45 mm × width 10 mm × thickness 3 mm) was used as the first base material 40J.

The above-mentioned SPCC base material (length 45 mm × width 18 mm × thickness 1.5 mm) was used as the second base material 50J.

The first base material 40J and the second base material 50J were superposed on each other such that the superposed region had a size of 5 mm in length × 10 mm in width such that the solid joining agent A1 was brought into contact with the surfaces of the second base material 50J so as to have the same positional relationship as in Figs. 18 and 19.

Next, by causing the metals to generate heat by high-frequency induction using a high-frequency induction welding machine (manufactured by Seidensha Electronics Co., Ltd., Oscillator UH-2.5K, Press JIIP30S), and the first base material40J and the second base material50J were joined by applying heat and pressure. The pressurization force was set to 110 N (pressure: 2.2 MPa), the oscillating frequency was set to 900 kHz, and the oscillating time was set to 1 second. Thus, a joined body A1-2 was produced.

### (Production of Joined Body A1-3 (PBT/AI))

The above-mentioned PBT (length 45 mm × width 10 mm × thickness 3 mm) was used as the first base material 40J.

The above-mentioned aluminum base material (length 45 mm × width 18 mm × thickness 1.5 mm) was used as the second base material 50J.

A joined body A1-3 was obtained in the same manner as the joined body A1-2 except that the first base material 40J and the second base material 50J were used, and the oscillation time of the high-frequency induction-welding machine was set to 6 seconds.

### <Example 2>

### (Production of Solid Joining Agent A2)

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, dissolution was visually confirmed, and the temperature was cooled to 40°C, thereby obtaining a resin composition P-2 having a solid content of 20% by mass. The solvent was removed from this to obtain a thermoplastic epoxy resin as a solid component. Non-adhesive fluororesin films (NITOFLON (registered trademark) No. 900UL, manufactured by Nitto Denko Corporation) were placed on an upper plate and a lower plate of a pressing machine, the thermoplastic epoxy resin was placed on the non-adhesive fluororesin film of the lower plate, the press machine was heated to 160°C, and the thermoplastic epoxy resin was heated and compressed for 2 hours to obtain a film-shaped solid joining agent A2 having a solid content of 100% by mass. The weight average molecular weight was 50,000, and the epoxy equivalent was above the detection limit. No heat of fusion peak was detected in DSC.

The dimensions of the solid joining agent A2 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A2 was used instead of the solid joining agent A1.

### <Example 3>

### (Production of Solid Joining Agent A3)

The solid joining agent A2 and a crystalline epoxy resin YSLV-80XY (manufactured by NIPPON STEEL Chemical & Material Co., Ltd.) were mixed at a mass ratio of 98:2, pressed, and cut to obtain a solid joining agent A3. The weight average molecular weight was 36,000, the epoxy equivalent was 9600 g/eq., and the heat of fusion was 2 J/g.

The dimensions of the solid joining agent A3 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A3 was used instead of the solid joining agent A1.

### <Example 4>

### (Production of Solid Joining Agent A4)

A solid joining agent A4 was obtained in the same manner as the solid joining agent A3 except that the solid joining agent A2 and a crystalline epoxy resin YSLV-80XY (manufactured by NIPPON STEEL Chemical & Material Co., Ltd.) were mixed at a mass ratio of 94:6. The weight-average molecular weight was 35,000, the epoxy equivalent was 2100 g/eq., and the heat of fusion was 4 J/g.

The dimensions of the solid joining agent A4 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A4 was used instead of the solid joining agent A1.

### <Example 5>

### (Production of Solid Joining Agent A5)

A solid joining agent A5 was obtained in the same manner as the solid joining agent A3 except that the solid joining agent A2 and a crystalline epoxy resin YSLV-80XY (manufactured by NIPPON STEEL Chemical & Material Co., Ltd.) were mixed at a mass ratio of 89: 11. The weight-average molecular weight was 33,000, the epoxy equivalent was 1745 g/eq., and the heat of fusion was 11 J/g.

The dimensions of the solid joining agent A5 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A5 was used instead of the solid joining agent A1.

### <Example 6>

### (Production of Solid Joining Agent A6)

Into a reaction device equipped with a stirrer, a reflux condenser, a gas introduction tube, and a thermometer, were put 1.0 equivalent (203 g) of jER (registered trademark) 1007 (manufactured by Mitsubishi Chemical Corporation, bisphenol A-type epoxy resin, molecular weight: about 4,060), 0.6 equivalents (12.5 g) of bisphenol S (molecular weight: 250), 2.4 g of triphenylphosphine, and 1,000 g of methyl ethyl ketone, and the temperature was increased to 100°C while stirring in a nitrogen atmosphere. Completion of dissolution was visually confirmed, and a resin composition P-3 with a solid content of about 20% by mass was obtained after cooling to 40°C. The solvent was removed from this to obtain a thermoplastic epoxy resin as a solid component. Non-adhesive fluororesin films (NITOFLON (registered trademark) No. 900UL, manufactured by Nitto Denko Corporation) were placed on an upper plate and a lower plate of a pressing machine, the thermoplastic epoxy resin was placed on the non-adhesive fluororesin film of the lower plate, the press machine was heated to 160°C, and the thermoplastic epoxy resin was heated and compressed for 2 hours to obtain a film-shaped solid joining agent A6 having a solid content of 100% by mass and a thickness of 100 µm. The weight average molecular weight was about 30,000, and the epoxy equivalent was above the detection limit. No heat of fusion peak was detected in DSC.

The dimensions of the solid joining agent A6 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A6 was used instead of the solid joining agent A1.

### <Example 7>

### (Production of Solid Joining Agent A7)

An amorphous polycarbonate film (Iupilon (registered trademark) FE2000, manufactured by Mitsubishi Engineering-Plastics Corporation, thickness: 100 µm) was used as a solid joined body A7. No heat of fusion peak was detected in DSC.

The dimensions of the solid joining agent A7 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A7 was used instead of the solid joining agent A1.

### <Example 8>

### (Production of Solid Joining Agent A8)

As the solid joining agent, a crystalline polyamide-based hot-melt adhesive film NT-120 (manufactured by Nihon Matai Co., Ltd., thickness: 100 µm) was used as a solid joined body A8. The heat of fusion was 60 J/g.

The dimensions of the solid joining agent A8 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent A8 was used instead of the solid joining agent A1.

### <Comparative Example 1>

### (Production of First Base Material)

A joined body was produced in the same manner as in Example 1 except that the same mold as in Fig. 1 was used except that the suction hole 22 was not provided, and the solid joining agent was not placed on the wall surface of the cavity 30.

### <Comparative Example 2>

### (Production of Solid Joining Agent B2)

Two liquids of a heat-curable liquid epoxy adhesive E-250 (manufactured by Konishi Co., Ltd., a two liquid type of a bisphenol-type epoxy and an amine curing agent) were mixed, applied to a release film, cured at 100°C for 1 hour, cooled, and peeled off from the release film to obtain a film-shaped solid joining agent B2.

The dimensions of the solid joining agent B2 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent B2 was used instead of the solid joining agent A1.

### <Comparative Example 3>

### (Production of Solid Joining Agent B3)

A crystalline epoxy resin YSLV-80XY (manufactured by NIPPON STEEL Chemical & Material Co., Ltd.) was pressed at a pressure of 5 MPa to obtain a sheet, and then the sheet was cut to obtain a film-shaped solid joining agent B3.

The dimensions of the solid joining agent A8 were the following two types.
- Length 10 mm × Width 15 mm × Thickness 100 µm
- Length 7 mm × Width 10 mm × Thickness 100 µm

### (Production of Joined body)

A joined body was produced in the same manner as in Example 1 except that the solid joining agent B3 was used instead of the solid joining agent A1.

### <Comparative Example 4>

### (Production of Solid Joining Agent B4)

A heat-curable liquid epoxy adhesive E-250 (manufactured by Konishi Co., Ltd., a two liquid type of a bisphenol-type epoxy resin and an amine curing agent) was directly used as a liquid joining agent B4.

### (Production of First Base Material)

The first base material was obtained in the same manner as in Example 1 except that the same mold as in Fig. 1 was used except that the suction hole 22 was not provided, and the solid joining agent was not placed on the wall surface of the cavity 30.

### (Production of Joined body (PBT/PA))

As a joining agent, a heat-curable liquid epoxy adhesive E-250 (manufactured by Konishi Co., Ltd., a two liquid type of a bisphenol-type epoxy resin and an amine curing agent) was used, and as a second base material, PA6 was used.

The two liquids of the joining agent were mixed, the mixture of the two liquids was applied to the surface of each of the first base material and the second base material over a region of 7 mm in length × 10 mm in width, and within 1 minute, the bonding was performed so that the superposed region was 5 mm in length × 10 mm in width. Thereafter, the joining agent was cured to a thickness of 0.1 mm by leaving it in an oven at 100°C for 1 hour in a state of being fixed with a clip. Thereafter, the joining agent was cooled to room temperature. Thus, a joined body was produced.

In addition, a joined body for open time evaluation was also produced in the same manner as described above except that the first base material and the second base material were allowed to stand for 3 days and then superposed and bonded together.

### (Production of Joined body (PC/SPCC))

A joined body was produced in the same manner as in the case of the joined body (PBT/PA) except that the above-mentioned PC (without a solid joining agent) was used as the first base material 40B and the above-mentioned SPCC was used as the second base material.

### (Production of Joined body (PBT/AI))

A joined body was produced in the same manner as in the case of the joined body (PBT/PA) except that the above-mentioned PBT (without a solid joining agent) was used as the first base material 40B and the above-mentioned aluminum base material was used as the second base material.

### <Comparative Example 5>

### (Production of First Base Material)

A first base material (without a solid joining agent) was prepared in the same manner as in Comparative Example 4.

### (Formation of Coating Layer on Second Base Material)

A flask was charged with 1.0 equivalent (203 g) of jER (registered trademark) 1007 (manufactured by Mitsubishi Chemical Corporation, bisphenol A-type epoxy resin, weight average molecular weight: about 10,000), 1 equivalent (12.5 g) of bisphenol S, 2.4 g of triphenylphosphine, and 1,000 g of methyl ethyl ketone, and the mixture was stirred at room temperature to obtain a liquid resin composition having a solid content of about 20% by mass. The liquid resin composition was applied to the second base material by bar coating application, dried at room temperature for 30 minutes, and then left to stand in an oven at 160°C for 2 hours to form a solid thermoplastic epoxy resin polymer coating layer having a length of 7 mm × a width of 10 mm × a thickness of 100 µm on the surface of the second base material. The coating layer was designated as a joining agent B5.

### (Production of Joined body)

A joined body was produced in the same manner as in Example 1, except that the coating layer on the first base material and the second base material were superposed.

In addition, a joined body for open time evaluation was also produced in the same manner as described above except that the first base material and the second base material were allowed to stand for 3 days and then superposed and bonded together.

### <Comparative Example 6>

### (Production of Solid Joining Agent B6)

Into a reaction device equipped with a stirrer, a reflux condenser, a gas introduction tube, and a thermometer, 20 g of Phenotohto (registered trademark) YP-50S (manufactured by NIPPON STEEL Chemical & Material Co., Ltd., phenoxy resin, weight average molecular weight: about 50,000) and 80 g of cyclohexanone were charged, the temperature was raised to 60°C while stirring, dissolution was visually confirmed, and the temperature was cooled to 40°C, thereby obtaining a liquid resin composition having a solid content of 20% by mass. The liquid resin composition was applied to the first base material by bar coating application and left to stand in an oven at 70°C for 30 minutes to form a phenoxy resin coating layer having a length of 7 mm × a width of 10 mm × a thickness of 100 µm on the surface of the first base material. The coating layer was designated as a joining agent B6.

### (Production of Joined body)

A joined body was produced in the same manner as in Example 1, except that the coating layer on the first base material and the second base material were superposed.

In addition, a joined body for open time evaluation was also produced in the same manner as described above except that the first base material and the second base material were allowed to stand for 3 days and then superposed and bonded together.

### <Comparative Example 7>

### (Production of First Base Material)

A first base material (without a solid joining agent) was prepared in the same manner as in Comparative Example 4.

### (Production of Joined body)

A joined body was produced in the same manner as in Example 1 except that the solid joining agent A1 was sandwiched between the first base material and the second base material at the time of joining.

In addition, a joined body for open time evaluation was also produced in the same manner as described above except that the first base material and the second base material were allowed to stand for 3 days and then superposed and bonded together.

**Table 1**

| | | | Example 1-1 | Example 1-2 | Example 1-3 | Example 2 | Example 3 | Example 4 | Example 5 | Example 6 | Example 7 | Example 8 |
|---|---|---|---|---|---|---|---|---|---|---|---|---|
| Properties of joining agent | | Form of joining agent | Film | Film | Film | Film | Film | Film | Film | Film | Film | Film |
| | | Resin main component | Thermoplastic epoxy resin | Thermoplastic epoxy resin | Thermoplastic epoxy resin | Phenoxy resin | Thermoplastic epoxy resin | Thermoplastic epoxy resin | Thermoplastic epoxy resin | Thermoplastic epoxy resin | Polycarbonate | Poly-amide |
| | | Weight average molecular weight | 37000 | 37000 | 37000 | 50000 | 36000 | 35000 | 33000 | 30000 | - | - |
| | | Heat of fusion [J/g] | No melting peak | No melting peak | No melting peak | No melting peak | 2 | 4 | 11 | No melting peak | No melting peak | 60 |
| | | Epoxy equivalent [g/eq.] | Above the detection limit | Above the detection limit | Above the detection limit | Above the detection limit | 9600 | 2100 | 1745 | Above the detection limit | - | - |
| | | Softening point [°C] | 101 | 101 | 101 | 94 | 87 | 83 | 65 | 80 | 150 | 45 |
| | | Melting point [°C] | 171 | 171 | 171 | 164 | 157 | 153 | 135 | 150 | 220 | 101 |
| Method of laminating first base material and joining agent (Integration method) | | | Insert molding | Insert molding | Insert molding | Insert molding | Insert molding | Insert molding | Insert molding | Insert molding | Insert molding | Insert molding |
| Joining agent used | | | A1 | A1 | A1 | A2 | A3 | A4 | A5 | A6 | A7 | A8 |
| Joining force (First base material/ Second base material) | 23°C Shear joining force [MPa] | PBT/PA | 13 | 13 | 12 | 13 | 13 | 12 | 12 | 12 | 10 | 10 |
| | | PC/SPCC | 24 | 23 | 22 | 19 | 22 | 23 | 23 | 18 | 7 | 4 |
| | | PBT/A1 | 23 | 23 | 23 | 23 | 24 | 20 | 21 | 16 | 5 | 4 |
| | 80°C Shear joining force [MPa] | PBT/PA | 8 | 7 | 8 | 7 | 10 | 7 | 5 | 6 | 7 | 7 |
| | | PC/SPCC | 16 | 15 | 16 | 18 | 18 | 15 | 14 | 14 | 2 | 3 |
| | | PBT/A1 | 14 | 13 | 12 | 17 | 15 | 13 | 12 | 11 | 1 | 3 |
| Convenience | Joining process time | | 1 minute | 1 minute | 1 minute | 1 minute | 1 minute | 1 minute | 1 minute | 1 minute | 1 minute | 1 minute |
| | Recycling property | | A | A | A | A | A | A | A | A | A | A |
| | Repairing property | | A | A | A | A | A | A | A | A | A | A |
| | Long open time property | | A | A | A | A | A | A | A | A | A | A |
| Handleability | | | A | A | A | A | A | A | A | A | A | A |
| Injection molding conditions (First base material) | PBT temperature [°C] | | 250 | 260 | 250 | 250 | 250 | 250 | 250 | 250 | 250 | 250 |
| | PBT mold temperature [°C] | | 50 | 50 | 30 | 50 | 50 | 50 | 50 | 50 | 50 | 50 |
| | PC temperature [°C] | | 280 | 280 | 275 | 280 | 280 | 280 | 280 | 280 | 280 | 280 |
| | PC mold temperature [°C] | | 85 | 110 | 60 | 85 | 85 | 85 | 85 | 85 | 85 | 85 |

**Table 2**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| Properties of joining agent | | Form of joining agent | None | Film | Film | Liquid | Coating layer | Coating layer | Film |
| | | Resin main component | None | Thermosetting epoxy resin | Epoxy resin | Thermosetting epoxy resin | Thermoplastic epoxy resin | Phenoxy resin | Thermoplastic epoxy resin |
| | | Weight average molecular weight | - | - | 340 | - | 40000 | 50000 | 37000 |
| | | Heat of fusion [J/g] | - | No melting peak | 70 | No melting peak | No melting peak | No melting peak | No melting peak |
| | | Epoxy equivalent [g/eq.] | - | | 192 | | Above the detection limit | Above the detection limit | Above the detection limit |
| | | Softening point [°C] | - | Not set | Not set | Not set | 100 | 94 | 101 |
| | | Melting point [°C] | - | Not set | 60 | Not set | 170 | 164 | 171 |
| Method of laminating first base material and joining agent (Integration method) | | | Insert molding | Insert molding | Insert molding | Apply to the base material | Apply to the base material | Apply to the base material | One step welding |
| Joining agent used | | | None | B2 | B3 | B4 | B5 | B6 | A1 |
| Joining force (First base material/ Second base material) | 23°C Shear joining force [MPa] | PBT/PA | 0 | The film did not adhere to the first base material during insertion. | The first base material in which the base material and the solid joining agent were integrated could not be obtained due to large melting during injection molding. | 3 | 13 | 17 | 7 |
| | | PC/SPCC | 0 | | | 2 | 26 | 20 | 24 |
| | | PBT/A1 | 0 | | | 3 | 20 | 5 | 23 |
| | 80°C Shear joining force [MPa] | PBT/PA | 0 | | | 3 | 8 | 8 | 6 |
| | | PC/SPCC | 0 | | | 1 | 18 | 10 | 16 |
| | | PBT/A1 | 0 | | | 2 | 14 | 10 | 14 |
| Convenience | Joining process time | | 1 minute | 1 minute | 1 minute | 70 minutes | 150 minutes | 32 minutes | 1 minute |
| | Recycling property | | B | B | A | A | A | A | A |
| | Repairing property | | B | B | A | B | A | A | A |
| | Long open time property | | B | B | A | B | A | A | A |
| Handleability | | | - | B | B | B | A | A | B |
| Injection molding conditions (First base material) | PBT temperature [°C] | | 250 | 250 | 250 | 250 | 250 | 250 | 250 |
| | PBT mold temperature [°C] | | 50 | 50 | 50 | 50 | 50 | 50 | 50 |
| | PC temperature [°C] | | 280 | 280 | 280 | 280 | 280 | 280 | 280 |
| | PC mold temperature [°C] | | 85 | 85 | 85 | 85 | 85 | 85 | 85 |

As shown in Table 1, the joined bodies according to Examples were excellent in 23°C shear joining force, 80°C shear joining force, and convenience (joining process time, recycling property, repairing property, and open time property).

Since the joined body according to Comparative Example 1 did not have a solid joining agent, the joining between the first base material and the second base material could not be performed, and the recycling property, the repairing property, and the open time property were inferior.

In the joined body according to Comparative Example 2, since the thermosetting resin was used as the solid joining agent, the first base material in which the solid joining agent and the base material were integrated was not obtained.

In the joined body according to Comparative Example 3, since the epoxy equivalent was a low value, the first base material and the second base material did not adhere to each other.

In the joined body according to Comparative Example 4, since the thermosetting resin was used as the solid joining agent, the joining strength between the first base material and the second base material was weak, and the repairing property and the open time property were inferior. In addition, since the joining agent was applied to the base material, the handleability was poor, and the joining process time was long.

Since the joined bodies according to Comparative Examples 5 and 6 had an operation of coating the base material with a joining agent to form a coating layer, the joining process time was long.

In the joined body according to Comparative Example 7, the solid joining agent was not integrated with the first base material, and thus the operation of forming the coating layer by coating the base material with the solid joining agent was required, and thus the handleability was poor, and the joining process time was long.

### Industrial Applicability

Joined bodies obtained by the production method of the present invention are used, for example, as automobile components, such as a door side panel, an engine hood roof, a tailgate, a steering hanger, an A pillar, a B pillar, a C pillar, a D pillar, a crush box, a power control unit (PCU) housing, an electric compressor component (such as an inner wall, an intake port, an exhaust control valve (ECV) insertion part, and a mount boss), a lithium ion battery (LIB) spacer, a battery case, and an LED head lamp, and as structural members of a smartphone, a notebook personal computer, a tablet personal computer, a smartwatch, a large size liquid crystal display television set (LCD-TV), and an outdoor LED illumination, but are not particularly limited to these exemplified applications.

### Reference Signs List

1: Mold
10: First mold
20: Second mold
30: Cavity
11: First cavity surface
21: Second cavity surface
12: Gate
13: Injection machine
22: Suction hole
40, 40A to 40J: First base material
41, 41A to 41J: Solid joining agent
42, 42A to 42J: Resin molded body
50, 50A to 50J: Second base material
60, 60A to 60J: Joined body

## Claims

1. A method for producing a joined body, comprising:
an injection molding step of injecting a thermoplastic resin composition into a cavity of a mold in a state where a solid joining agent containing a thermoplastic resin having an epoxy equivalent of 1,600 or more or containing no epoxy group is placed on a wall surface in the cavity to obtain a first base material in which a resin molded body made of the thermoplastic resin composition and the solid joining agent are integrated; and
a joining step of melting and then solidifying the solid joining agent in a state where the solid joining agent of the first base material is in contact with a second base material to obtain a joined body between the first base material and the second base material.

2. The method for producing a joined body according to claim 1, wherein the thermoplastic resin contained in the solid joining agent contains at least one selected from a thermoplastic epoxy resin and a phenoxy resin.

3. The method for producing a joined body according to claim 1, wherein the thermoplastic resin contained in the solid joining agent is an amorphous thermoplastic resin, and the amorphous thermoplastic resin has a heat of fusion of 15 J/g or less.

4. The method for producing a joined body according to claim 1 or 2, wherein in the joining step, the solid joining agent is melted and then solidified by at least one selected from the group consisting of contact-heating, warm-air-heating, hot press, infrared-heating, hot-plate welding, ultrasonic welding, vibration welding, high-frequency induction welding, and high-frequency dielectric welding.

5. The method for producing a joined body according to claim 1 or 2, wherein a softening point of the solid joining agent is lower than a melting point of the resin molded body.

6. The method for producing a joined body according to claim 1 or 2, wherein the second base material is a metal.

7. The method for producing a joined body according to claim 1 or 2, wherein the joining step is performed under conditions of pressures of the first base material and the second base material of 0.01 to 20 MPa.

8. The method for producing a joined body according to claim 1 or 2, wherein in the first base material, the surface of the solid joining agent is flush with the surface of the resin molded body.

9. The method for producing a joined body according to claim 1 or 2, wherein the solid joining agent placed on the wall surface in the cavity is a film.

10. A method for producing a base material, the method comprising: injecting a thermoplastic resin composition into a cavity of a mold in a state where a solid joining agent is placed on a wall surface in the cavity, to thereby obtain a base material in which a resin molded body made of the thermoplastic resin composition and the solid joining agent are integrated, wherein the solid joining agent is at least one selected from a thermoplastic epoxy resin and a phenoxy resin and contains an amorphous thermoplastic resin having an epoxy equivalent of 1,600 or more or containing no epoxy group.
